# EUROPÄISCHE PATENTSCHRIFT

(11) **EP 4 389 547 B1**
(45) Veröffentlichungstag und Bekanntmachung des Hinweises auf die Patenterteilung: **03.06.2026**
(21) Anmeldenummer: 23210789.6
(22) Anmeldetag: 20.11.2023
(51) Int. Cl.: B60T 13/26, B60T 13/68, B60T 17/22

(54) **VERFAHREN ZUR BREMSSTEUERUNG EINES FAHRZEUGGESPANNS**
METHOD FOR CONTROLLING THE BRAKING OF A VEHICLE COMBINATION
PROCÉDÉ DE COMMANDE DE FREINAGE D'UN VÉHICULE COMBINÉ À UN REMORQUE

(30) Priorität: 19.12.2022 DE 102022213834
(43) Veröffentlichungstag der Anmeldung: 26.06.2024
(73) Patentinhaber: ZF CV Systems Global GmbH, 3006 Bern (CH)
(72) Erfinder: Laskawy, Ivo, 21149 Hamburg (DE); Pauka, Simon, 30165 Hannover (DE); Volker, Lars, 30926 Seelze (DE)
(74) Vertreter: ZF Friedrichshafen AG

(56) Entgegenhaltungen:
- EP-B1- 2 918 469
- WO-A1-2004/022401
- DE-A1- 102013 019 240
- DE-A1- 19 955 798
- DE-B4- 19 744 066
- US-A1- 2022 048 490

## Beschreibung

Die Erfindung betrifft ein Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil genutzt wird, welches zumindest zwei von einer elektronischen Steuereinheit ansteuerbare Magnetschaltventile aufweist, welche als Einlassventil und Auslassventil ausgebildet sind, wobei mittels des Bremssteuerventils ein Bremssteuerdruck in einer von einem Bremssteuerausgang des Bremssteuerventils bis zu einem Kupplungskopf "Bremse" des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen der Bremssteuerleitung ist.

Um einen Bremsvorgang eines Fahrzeuggespanns optimal steuern zu können, ist die Kenntnis über den aktuellen Anhängerstatus, also ob mindestens ein Anhängefahrzeug angekoppelt oder kein Anhängefahrzeug am Zugfahrzeug angekoppelt ist, nützlich. Ob ein Anhängefahrzeug angekoppelt oder nicht angekoppelt ist, kann zwar bei allen Anhängersteckdosen indirekt über die vorgeschriebene Überwachung der Anhänger-Blinkleuchten oder bei einer speziellen Belegung von zwei Kontakten einer 13-poligen Anhängersteckdose unmittelbar anhand des über eine Steckverbindung an das elektrische Bordnetz des Zugfahrzeugs angeschlossenen oder nicht angeschlossenen Bordnetzes des Anhängers erkannt werden. Die elektrischen Kontakte des anhängerseitigen Steckers und/oder der zugfahrzeugseitigen Steckdose können jedoch korrodiert oder verschmutzt sein, oder die betreffende Signalleitung kann irgendwo unterbrochen sein, sodass eine alternative Ermittlung des Anhängerstatus vorteilhaft ist.

Außerdem ist für eine optimale Steuerung eines Bremsvorgangs die Kenntnis des Leitungsvolumens der bei angekoppeltem Anhängefahrzeug von dem Bremssteuerausgang des Anhängersteuerventils im Zugfahrzeug bis an den Bremssteuereingang des Anhängerbremsventils im Anhängefahrzeug verlaufenden Bremssteuerleitung erforderlich, um einen vorgegebenen Bremssteuerdruck in der Bremssteuerleitung für eine weitgehend verzögerungsfreie Betätigung der Radbremsen des Anhängefahrzeugs schnell aufbauen zu können. Das Anhängerbremsventil der Anhängefahrzeuge ist zumeist nahe der Zugdeichsel oder der Sattelplatte und somit relativ weit vorne angeordnet ist, welches ein relativ kleines Leitungsvolumen der Bremssteuerleitung bewirkt. Da ein landwirtschaftliches Zugfahrzeug jedoch bis zu zwei Anhängefahrzeuge ziehen darf, sind landwirtschaftliche Anhängefahrzeuge an ihrem Heck häufig mit einer Anhängekupplung und zwei pneumatischen Kupplungsköpfen zum Ankoppeln eines zweiten Anhängefahrzeugs und dem Anschluss deren Bremsanlage versehen. Die Bremssteuerleitung eines derartigen Anhängefahrzeugs verläuft von dem betreffenden Kupplungskopf zum Anschluss an den Kupplungskopf des Zugfahrzeugs einerseits bis zum Anhängerbremsventil und andererseits bis zum Kupplungskopf am Heck des Anhängefahrzeugs, welches ein vergleichsweise großes Leitungsvolumen der Bremssteuerleitung zur Folge hat.

Bei einem Verfahren aus der DE 10 2020 106 448 A1 bekannten Verfahren zur Bremssteuerung eines Fahrzeuggespanns ist zur Ermöglichung einer verzögerungsarmen Betätigung der Radbremsen eines angekoppelten Anhängefahrzeugs vorgesehen, dass zu Beginn eines Bremsvorgangs ein den aufzubauenden Bremssteuerdruck übersteigender Druckimpuls in die Bremssteuerleitung eingesteuert wird, wobei die Höhe und/oder die Dauer des Druckimpulses in Abhängigkeit von dem ermittelten Leitungsvolumen der Bremssteuerleitung festgelegt werden. Das Leitungsvolumen der Bremssteuerleitung wird nach jeder neuen Inbetriebnahme des Zugfahrzeugs ermittelt, indem bei einem Lösen der Radbremsen die Zeitspanne des Druckabfalls und/oder der mittlere Druckgradient während des Druckabfalls in der Bremssteuerleitung sensorisch ermittelt sowie mit abgespeicherten Referenzwerten verglichen werden. Anhand des ermittelten Leitungsvolumens der Bremssteuerleitung wird auch erkannt, ob ein Anhängefahrzeug angekoppelt oder nicht angekoppelt ist. Die Größe und/oder die Dauer des eingesteuerten Druckimpulses werden mit zunehmendem Leitungsvolumen der Bremssteuerleitung erhöht.

In der DE 197 44 066 B4 ist ein Verfahren zum Erkennen eines Anhängerbetriebs bei einem Kraftfahrzeug beschrieben, bei dem bei einer Bremsbetätigung der Druckaufbau in der zu dem Anhängefahrzeug geführten Bremssteuerleitung sensorisch erfasst und daraus eine kennzeichnende Größe bestimmt wird, anhand der ein Anhängerbetrieb erkannt werden kann. Als kennzeichnende Größe wird der Druckgradient während des Druckaufbaus in der Bremssteuerleitung bestimmt und mit einem durch die Betätigung des Bremspedals im Zugfahrzeug vorgegebenen Soll-Druckgradienten verglichen. Bei einer Abweichung des Druckgradienten von dem Soll-Druckgradienten nach unten wird ein Anhängerbetrieb, d.h. ein angekoppelter Anhänger, erkannt.

Aus der EP 2 918 469 B1 sind eine Vorrichtung und ein Verfahren zur Erkennung eines angekoppelten Anhängefahrzeugs bekannt, bei denen vorgesehen ist, dass nach dem Lösen der Radbremsen der Bremssteuerdruck in der Bremssteuerleitung in der von dem Anhängersteuerventil des Zugfahrzeugs bis zu dem Kupplungskopf "Bremse" oder bis zu dem Anhängerbremsventil eines angekoppelten Anhängers geführten Bremssteuerventil sensorisch erfasst wird. Aus dem Verlauf des Bremssteuerdruckes während des Druckabfalls wird die Zeitspanne bis zum Erreichen eines vorbestimmten Druckwertes bestimmt und mit einem vorbestimmten Zeitwert verglichen. Wenn die Zeitspanne des Druckabfalls den vorbestimmten Zeitwert unterschritten hat, wird damit ein nicht angekoppeltes Anhängefahrzeug erkannt. Wenn die Zeitspanne des Druckabfalls dem vorbestimmten Zeitwert entspricht oder diesen überschritten hat, wird damit ein angekoppeltes Anhängefahrzeug erkannt.

DE 10 2013 019 240 A1 betrifft ein Verfahren zum Erkennen von Betriebszuständen eines Fahrzeuges, insbesondere einem Zustand des Fahrzeuges mit oder ohne Anhänger. Insbesondere wird ein Verfahren zum Erkennen von einem Betriebszustand eines Fahrzeuges beschrieben, wobei der Betriebszustand ausgewählt ist aus mindestens einem ersten oder zweiten Betriebszustand, insbesondere aus einem Zustand des Fahrzeuges mit oder ohne Anhänger, und das Fahrzeug aufweisend ein pneumatisches Bremssystem und eine pneumatische Steuerverbindung, die ausgebildet ist, um das pneumatische Bremssystem mit einem weiteren pneumatischen Bremssystem eines Anhängers zu verbinden. DE 199 55 798 A1 betrifft eine Einrichtung zur Anhängerkennung, welche die Besonderheiten eines Gespannes, bestehend aus einem hydraulisch gebremsten Zugfahrzeug und einem pneumatisch gebremsten Anhänger, berücksichtigt. US 2022/048490 A1 bezieht sich auf Fahrzeugparksysteme und ist insbesondere auf eine Feststellbremsvorrichtung und ein Verfahren für eine Fahrzeugantriebseinheit, wie z. B. eine Sattelzugmaschine, gerichtet, an die eine von einem Fahrzeug gezogene Einheit, wie z. B. ein LKW-Anhänger, angeschlossen werden kann.

Die der Erfindung zugrunde liegende Aufgabe besteht darin, ein Verfahren zur Bremssteuerung eines Fahrzeuggespanns der eingangs genannten Art vorzustellen, mit dem mindestens eine alternative Möglichkeit zur Ermittlung des Anhängerstatus eines Zugfahrzeugs sowie des Leitungsvolumens der Bremssteuerleitung angegeben wird.

Diese Aufgabe ist durch Verfahren mit den Merkmalen der unabhängigen Ansprüche 1 , 6 und 11 gelöst. Die davon abhängigen Ansprüche definieren vorteilhafte Weiterbildungen der Verfahren.

Demnach betrifft die Erfindung ein Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil genutzt wird, welches zumindest zwei von einer elektronischen Steuereinheit ansteuerbare Magnetschaltventile aufweist, welche als Einlassventil und Auslassventil ausgebildet sind, wobei mittels des Bremssteuerventils ein Bremssteuerdruck in einer von einem Bremssteuerausgang des Bremssteuerventils bis zu einem Kupplungskopf "Bremse" des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen der Bremssteuerleitung ist.

Zur Lösung der genannten Aufgabe ist vorgesehen, dass ein in der Bremssteuerleitung einzustellender Zieldruck vorgegeben wird, dass dieser Zieldruck durch pulsartiges Öffnen des Einlassventils und/oder durch pulsartiges Öffnen des Auslassventils in die Bremssteuerleitung eingesteuert wird, dass der Bremssteuerdruck in der Bremssteuerleitung während des Druckaufbaus sensorisch gemessen wird, dass aus dem zeitlichen Druckverlauf des Bremssteuerdruckes und/oder dem zeitlichen Verlauf der Schaltzustände des Einlassventils und/oder des Auslassventils bis zum Erreichen des Zieldruckes ein für den Anhängerstatus des Zugfahrzeugs und/oder das Leitungsvolumen der Bremssteuerleitung charakteristischer Kennwert bestimmt wird, dass dieser Kennwert mit mindestens einem vorab in Abhängigkeit von dem Anhängerstatus des Zugfahrzeugs und/oder des Leitungsvolumens der Bremssteuerleitung ermittelten sowie in einem Datenspeicher der Steuereinheit abgespeicherten Referenzwert verglichen wird, und dass abhängig von dem Vergleichsergebnis der Anhängerstatus des Zugfahrzeugs und/oder das Leitungsvolumen der Bremssteuerleitung bestimmt werden.

Die Erfindung geht demnach von einem Fahrzeuggespann aus, welches aus einem Zugfahrzeug mit einer hydraulischen oder pneumatischen Bremsanlage und mindestens einem ankoppelbaren Anhängefahrzeug mit einer druckgesteuerten pneumatischen Bremsanlage besteht. Bei dem Fahrzeuggespann ist über ein in dem Zugfahrzeug angeordnetes, elektronisch steuerbares Bremssteuerventil, welches zumindest zwei von einer elektronischen Steuereinheit ansteuerbare Magnetschaltventile, nämlich ein Einlassventil und ein Auslassventil, aufweist, ein Bremssteuerdruck in eine von einem Bremssteuerausgang des Bremssteuerventils bis zu einem Kupplungskopf "Bremse" des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung einsteuerbar.

Durch die Vorgabe eines Zieldruckes und dessen Einsteuerung durch ein pulsartiges Öffnen des Einlassventils und/oder durch ein pulsartiges Öffnen des Auslassventils in die Bremssteuerleitung ergeben sich bis zum Erreichen des Zieldruckes ein Druckanstieg beim Bremssteuerdruck sowie eine Mehrzahl von Schaltzuständen des Einlassventils und/oder des Auslassventils, mit denen mindestens ein Kennwert bestimmt werden kann, welcher charakteristisch für den Anhängerstatus des Zugfahrzeugs und/oder das Leitungsvolumen der Bremssteuerleitung ist.

Der Anhängerstatus gibt an, ob mindestens ein Anhängefahrzeug angekoppelt ist oder ob kein Anhängefahrzeug angekoppelt ist. Durch den Vergleich des Kennwertes mit mindestens einem vorab in Abhängigkeit des Anhängerstatus des Zugfahrzeugs und/oder des Leitungsvolumens der Bremssteuerleitung ermittelten und in einem Datenspeicher der Steuereinheit abgespeicherten Referenzwert kann der Anhängerstatus des Zugfahrzeugs und/oder das Leitungsvolumen der Bremssteuerleitung bestimmt werden. Die Belüftung der Bremssteuerleitung kann dabei mit Öffnungspulsen des Einlassventils und/oder des Auslassventils erfolgen, welche eine variable Pulsweite und/oder einen variable zeitlichen Pulsabstand aufweisen. Dabei wird die Pulsweite zu Beginn der Belüftung relativ groß eingestellt und mit zunehmender Annäherung des Bremssteuerdruckes an den Zieldruck reduziert. Dagegen wird der Pulsabstand zu Beginn der Belüftung der Bremssteuerleitung relativ klein eingestellt und mit zunehmender Annäherung des Bremssteuerdruckes an den Zieldruck vergrößert.

Hierzu ist erfindungsgemäß vorgesehen, dass die Pulsweiten PW_{IV}, PWov der Öffnungspulse des Einlassventils und des Auslassventils bis zum Erreichen des Zieldruckes pz ermittelt und jeweils separat zu einer Pulsweitensumme Σ PW_{IV} des Einlassventils und zu einer Pulsweitensumme Σ PWov des Auslassventils addiert werden, dass durch eine Subtraktion der Pulsweitensumme Σ PWov des Auslassventils von der Pulsweitensumme Σ PW_{IV} des Einlassventils eine Pulsweitensummendifferenz Σ PW_{IV} - Σ PWov als Kennwert bestimmt wird, und dass durch einen Vergleich der aktuellen Pulsweitensummendifferenz Σ PW_{IV} - Σ PWov mit vorab für verschiedene Leitungsvolumen der Bremssteuerleitung als Referenzwerte ermittelten und abgespeicherten Pulsweitensummendifferenzwerten der aktuelle Anhängerstatus des Zugfahrzeugs und/oder das aktuelle Leitungsvolumen V_{BC} der Bremssteuerleitung bestimmt werden.

Diese erste Verfahrensvariante wie auch die nachfolgend erläuterten drei Verfahrensvarianten nutzen den Effekt aus, dass sich die Belüftung der Bremssteuerleitung bis zum Erreichen des Zieldruckes über eine längere Zeitspanne erstreckt, und zwar je länger die Bremssteuerleitung und je größer deren Leitungsvolumen ist. Dementsprechend sind zum Erreichen des Zieldruckes Öffnungspulse des Einlassventils mit größerer Pulsweite und/oder mehr Öffnungspulse des Einlassventils erforderlich und/oder die Zeitspanne bis zum Erreichen des Zieldruckes ist größer, je länger die Bremssteuerleitung und je größer deren Leitungsvolumen ist.

Gemäß einer ersten Verfahrensvariante ist vorgesehen, dass die Öffnungspulse P_{IV} des Einlassventils und/oder die Öffnungspulse Pov des Auslassventils bis zum Erreichen des Zieldruckes pz ermittelt sowie zu einer Öffnungspulsanzahl n_{P} als Kennwert aufsummiert werden, und dass durch einen Vergleich der aktuellen Öffnungspulsanzahl mit vorab für verschiedene Leitungsvolumen der Bremssteuerleitung als Referenzwerte ermittelten sowie abgespeicherten Öffnungspulsanzahlwerten der aktuelle Anhängerstatus des Zugfahrzeugs und/oder das aktuelle Leitungsvolumen V_{BC} der Bremssteuerleitung bestimmt werden.

Gemäß einer zweiten Verfahrensvariante, ist vorgesehen, dass die Anzahl der Öffnungspulse P_{IV}, Pov des Einlassventils und des Auslassventils bis zum Erreichen des Zieldruckes pz erfasst und jeweils separat zu einer Öffnungspulsanzahl Σ n_{P_IV} des Einlassventils und zu einer Öffnungspulsanzahl Σ n_{P_OV} des Auslassventils addiert werden, dass durch eine Subtraktion der Öffnungspulsanzahl Σ n_{P_OV} des Auslassventils von der Öffnungspulsanzahl Σ n_{P_IV} des Einlassventils eine Pulsanzahldifferenz (Σ n_{P_IV} - Σ n_{P_OV}) als Kennwert bestimmt wird, und dass durch einen Vergleich der aktuellen Pulsanzahldifferenz Σ n_{P_IV} - Σ n_{P_OV} mit vorab für verschiedene Leitungsvolumen der Bremssteuerleitung als Referenzwerte ermittelten und abgespeicherten Pulsanzahldifferenzwerten der aktuelle Anhängerstatus des Zugfahrzeugs und/oder das aktuelle Leitungsvolumen V_{BC} der Bremssteuerleitung bestimmt werden.

Eine mögliche Verfahrensvariante sieht vor, dass die Zeitspanne Δp_{Z} bis zum Erreichen des Zieldruckes pz ermittelt wird und als Druckaufbauzeit den Kennwert bildet, und dass durch einen Vergleich der aktuellen Druckaufbauzeit Δp_{Z} mit vorab für verschiedene Leitungsvolumen der Bremssteuerleitung als Referenzwerte ermittelten und abgespeicherten Druckaufbauzeitwerten der aktuelle Anhängerstatus des Zugfahrzeugs und/oder das aktuelle Leitungsvolumen V_{BC} der Bremssteuerleitung bestimmt werden.

Bei einer weiteren Verfahrensvariante wird der Effekt ausgenutzt, dass in der Luftsäule der in der Bremssteuerleitung eingeschlossenen Druckluft durch das pulsartige Öffnen des Einlassventils und/oder durch das pulsartige Öffnen des Auslassventils Druckschwingungen angeregt werden, deren Anzahl und Amplituden sich abhängig von der Länge und dem Leitungsvolumen der Bremssteuerleitung unterscheiden. Demzufolge ist bei dieser Verfahrensvariante vorgesehen, dass die Anzahl und/oder die mittlere Amplitude von Druckschwingungen des Bremssteuerdruckes p_{BC} bis zum Erreichen des Zieldruckes pz als eine den Kennwert bildende Schwingungsanzahl ns und/oder mittlere Schwingungsamplitude A_{S_m} erfasst wird, und dass durch einen Vergleich der aktuellen Schwingungsanzahl ns und/oder der aktuellen Schwingungsamplitude A_{S_m} mit vorab für verschiedene Leitungsvolumen der Bremssteuerleitung als Referenzwerte ermittelten sowie abgespeicherten Schwingungsanzahlwerten und/oder Schwingungsamplitudenwerten der aktuelle Anhängerstatus des Zugfahrzeugs und/oder das aktuelle Leitungsvolumen V_{BC} der Bremssteuerleitung bestimmt werden.

Gemäß einer Weiterbildung der genannten Verfahrensvarianten ist vorgesehen, dass der Anhängerstatus hinsichtlich eines nicht angekoppelten Anhängefahrzeugs erkannt wird, wenn der aktuelle Kennwert Σ PW_{IV} - Σ PW_{OV}, n_{P}, Δp_{Z}, n_{S}, A_{S_m} innerhalb einer vorgegebenen Toleranz mit einem ohne angekoppelten Anhängefahrzeug ermittelten Referenzwert übereinstimmt, und dass der Anhängerstatus hinsichtlich eines angekoppelten Anhängefahrzeugs erkannt wird, wenn der aktuelle Kennwert Σ PW_{IV} - Σ PW_{OV}, n_{P}, Δp_{Z}, n_{S}, A_{S_m} größer als der ohne angekoppelten Anhängefahrzeugs ermittelte Referenzwert ist.

Außerdem kann vorgesehen sein, dass das Leitungsvolumen V_{BC} der Bremssteuerleitung als das Leitungsvolumen einer bis zum Kupplungskopf "Bremse" verlaufenden Bremssteuerleitung bestimmt wird, wenn der aktuelle Kennwert Σ PW_{IV} - Σ PW_{OV}, n_{P}, Δp_{Z}, n_{S}, A_{S_m} innerhalb einer vorgegebenen Toleranz mit dem ohne angekoppelten Anhängefahrzeug ermittelten Referenzwert übereinstimmt.

Weiter kann vorgesehen sein, dass das Leitungsvolumen V_{BC} der Bremssteuerleitung als das Leitungsvolumen eines bei angekoppeltem Anhängefahrzeug ermittelten Referenzwertes bestimmt wird, wenn der aktuelle Kennwert Σ PW_{IV} - Σ PW_{OV}, n_{P}, Δp_{Z}, n_{S}, A_{S_m} innerhalb einer vorgegebenen Toleranz mit dem betreffenden Referenzwert übereinstimmt, oder durch eine Interpolation zwischen zwei Leitungsvolumenwerten von zwei bei angekoppeltem Anhängefahrzeug ermittelten Referenzwerten bestimmt wird, wenn der aktuelle Kennwert Σ PW_{IV} - Σ PW_{OV}, n_{P}, Δp_{Z}, n_{S}, A_{S_m} zwischen den beiden betreffenden Referenzwerten liegt.

Ein von den bisher genannten Ausführungsformen unabhängiger Verfahrensablauf betrifft ebenfalls ein Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil genutzt wird, welches zumindest zwei von einer elektronischen Steuereinheit ansteuerbare Magnetschaltventile aufweist, welche als Einlassventil und Auslassventil ausgebildet sind, wobei mittels des Bremssteuerventils ein Bremssteuerdruck in einer von einem Bremssteuerausgang des Bremssteuerventils bis zu einem Kupplungskopf "Bremse" des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen der Bremssteuerleitung ist.

Bei diesem Verfahren vorgesehen, dass ein mit festgelegter Öffnungsdauer Δt_{IV} des Einlassventils in die Bremssteuerleitung einzubringender pneumatischer Druckimpuls vorgegeben wird, dass der Druckimpuls durch ein pulsartiges Öffnen des Einlassventils in die Bremssteuerleitung eingesteuert wird, dass der nach einer vorgegebenen Zeitspanne Δt_{P} nach dem Schließen des Einlassventils in der Bremssteuerleitung vorliegende Bremssteuerdruck p_{BC} als Restdruck Δp_{R} sensorisch ermittelt wird, dass der Restdruck Δp_{R} mit mindestens einem vorab in Abhängigkeit des Anhängerstatus des Zugfahrzeugs und/oder des Leitungsvolumens der Bremssteuerleitung ermittelten sowie in einem Datenspeicher der Steuereinheit abgespeicherten Referenzdruckwert verglichen wird, und dass abhängig von dem Vergleichsergebnis der Anhängerstatus des Zugfahrzeugs und/oder das Leitungsvolumen V_{BC} der Bremssteuerleitung bestimmt werden.

Hierbei wird der Effekt ausgenutzt, dass der nach einem eingesteuerten Druckimpuls verbleibende Restdruck mit zunehmender Länge und entsprechend zunehmendem Leitungsvolumen der Bremssteuerleitung niedriger ausfällt. Daher kann vorgesehen sein, dass der Anhängerstatus hinsichtlich eines nicht angekoppelten Anhängefahrzeugs erkannt wird, wenn der aktuelle Restdruck Δp_{R} innerhalb einer vorgegebenen Toleranz mit einem ohne angekoppelten Anhängefahrzeug ermittelten Referenzdruckwert übereinstimmt, und dass der Anhängerstatus hinsichtlich eines angekoppelten Anhängefahrzeugs erkannt wird, wenn der aktuelle Restdruck Δp_{R} kleiner ist als der ohne angekoppeltes Anhängefahrzeug ermittelte Referenzdruckwert.

Weiter kann vorgesehen sein, dass das Leitungsvolumen V_{BC} der Bremssteuerleitung als das Leitungsvolumen einer bis zum Kupplungskopf "Bremse" verlaufenden Bremssteuerleitung bestimmt wird, wenn der aktuelle Restdruck Δp_{R} innerhalb einer vorgegebenen Toleranz mit dem ohne angekoppelten Anhängefahrzeug ermittelten Referenzdruckwert übereinstimmt.

Das Leitungsvolumen V_{BC} der Bremssteuerleitung wird jedoch dann als das Leitungsvolumen eines bei angekoppeltem Anhängefahrzeug ermittelten Referenzdruckwertes bestimmt, wenn der aktuelle Restdruck Δp_{R} innerhalb einer vorgegebenen Toleranz mit dem betreffenden Referenzdruckwert übereinstimmt.

Außerdem kann das Leitungsvolumen V_{BC} der Bremssteuerleitung durch eine Interpolation zwischen zwei Leitungsvolumenwerten von zwei bei angekoppeltem Anhängefahrzeug ermittelten Referenzdruckwerten bestimmt werden, wenn der aktuelle Restdruck Δp_{R} zwischen den beiden betreffenden Referenzdruckwerten liegt.

Bei einer längeren Fahrtunterbrechung kann der Vorratsdruck in den Vorratsleitungen eines Zugfahrzeugs und eines Anhängefahrzeugs sowie in den an diese angeschlossenen Speicherbehältern leckagebedingt absinken, sodass bei der Inbetriebnahme des Zugfahrzeugs zunächst ein relativ niedriger Vorratsdruck zur Verfügung steht. Da die Bremssteuerleitung über das Anhängersteuerventil aus der eingangsseitigen Vorratsleitung des Zugfahrzeugs belüftet wird, erfordert die Einstellung des Zieldruckes bei niedrigem Vorratsdruck Öffnungspulse des Einlassventils mit größeren Pulsweiten und/oder mehr Öffnungspulse des Einlassventils und/oder eine längere Zeitspanne. Ebenso können bei niedrigem Vorratsdruck mehr Druckschwingungen und/oder Druckschwingungen mit höherer oder geringerer Schwingungsamplitude in der Bremssteuerleitung angeregt werden und sich nach der Einsteuerung eines Druckimpulses ein niedrigerer Restdruck in der Bremssteuerleitung einstellen.

Es ist daher vorteilhaft, wenn bei allen genannten Verfahren und Verfahrensvarianten zur Ermittlung des aktuellen Anhängerstatus des Zugfahrzeugs und/oder zur Ermittlung des aktuellen Leitungsvolumens V_{BC} der Bremssteuerleitung zusätzlich der in einer Vorratsleitung des Zugfahrzeugs aktuell anliegende Vorratsdruck p_{V} gemessen wird, und dass der Vergleich des jeweiligen Kennwertes Σ PW_{IV} - Σ PW_{OV}, n_{P}, Δp_{Z}, n_{S}, A_{S_m} beziehungsweise des Restdruckes Δp_{R} mit vorab für den entsprechenden Vorratsdruck pv ermittelten sowie abgespeicherten Referenzwerten beziehungsweise Referenzdruckwerten erfolgt.

Zur Erhöhung der Genauigkeit kann auch vorgesehen sein, dass die Ermittlung des aktuellen Anhängerstatus des Zugfahrzeugs und/oder des aktuellen Leitungsvolumens V_{BC} der Bremssteuerleitung durch eine Kombination von mindestens zwei der genannten Verfahrensvarianten erfolgt.

Die Ermittlung des aktuellen Anhängerstatus des Zugfahrzeugs und/oder des aktuellen Leitungsvolumens der Bremssteuerleitung mit den genannten Verfahrensvarianten erfolgt gemäß einer anderen Weiterbildung der Verfahren automatisch, also ohne eine Betätigung des Bremspedals durch den Fahrer, nach jeder Inbetriebnahme des Zugfahrzeugs, also nach dem Einschalten des Bordnetzes im Zugfahrzeug durch den Fahrer, und/oder nach jedem Lösen der Parkbremse im Zugfahrzeug durch den Fahrer.

Die Erfindung wird nachstehend anhand von in der beigefügten Zeichnung dargestellten Ausführungsbeispielen weiter erläutert. In der Zeichnung zeigt
Fig. 1 einen Bremssteuerdruckverlauf über die Zeit und zugeordnete Schaltzustände von pulsartig geöffneten sowie geschlossenen Einlassventilen und Auslassventilen während der Einsteuerung eines Zieldruckes in eine Bremssteuerleitung,
Fig. 2 in einem Diagramm die Werte von Pulsweitensummendifferenzen in Abhängigkeit von Leitungsvolumina einer Bremssteuerleitung,
Fig. 3 einen Bremssteuerdruckverlauf über die Zeit und zugeordnete Schaltzustände eines pulsartig geöffneten und geschlossenen Einlassventils während der Einsteuerung eines Zieldruckes in eine Bremssteuerleitung bei nicht angekoppeltem Anhängefahrzeug,
Fig. 4 einen Bremssteuerdruckverlauf über die Zeit und zugeordnete Schaltzustände eines pulsartig geöffneten und geschlossenen Einlassventils während der Einsteuerung eines Zieldruckes in eine Bremssteuerleitung bei angekoppeltem Anhängefahrzeug,
Fig. 5 einen Bremssteuerdruckverlauf über die Zeit und zugeordnete Schaltzustände eines pulsartig geöffneten und geschlossenen Einlassventils während der Einsteuerung eines Zieldruckes in eine Bremssteuerleitung bei nicht angekoppeltem Anhängefahrzeug,
Fig. 6 einen Bremssteuerdruckverlauf über die Zeit und zugeordnete Schaltzustände eines pulsartig geöffneten und geschlossenen Einlassventils während der Einsteuerung eines Zieldruckes in eine Bremssteuerleitung bei angekoppeltem Anhängefahrzeug,
Fig. 7 einen Bremssteuerdruckverlauf über die Zeit während der Einsteuerung eines Zieldruckes in eine Bremssteuerleitung bei nicht angekoppeltem und angekoppeltem Anhängefahrzeug bei unterschiedlich gefüllten Speicherbehältern und einem Vorratsdruck im Speicherbehälter des Zugfahrzeugs von 4 × 10⁵ Pa,
Fig. 8 einen Bremssteuerdruckverlauf über die Zeit während der Einsteuerung eines Zieldruckes in eine Bremssteuerleitung bei nicht angekoppeltem und angekoppeltem Anhängefahrzeug bei unterschiedlich gefüllten Speicherbehältern und einem Vorratsdruck im Speicherbehälter des Zugfahrzeugs von 6 × 10⁵ Pa,
Fig. 9 einen Bremssteuerdruckverlauf über die Zeit während der Einsteuerung eines Druckimpulses in eine Bremssteuerleitung bei nicht angekoppeltem und bei angekoppeltem Anhängefahrzeug, sowie
Fig. 10 ein bekanntes Anhängersteuerventil zur Durchführung des Verfahrens.

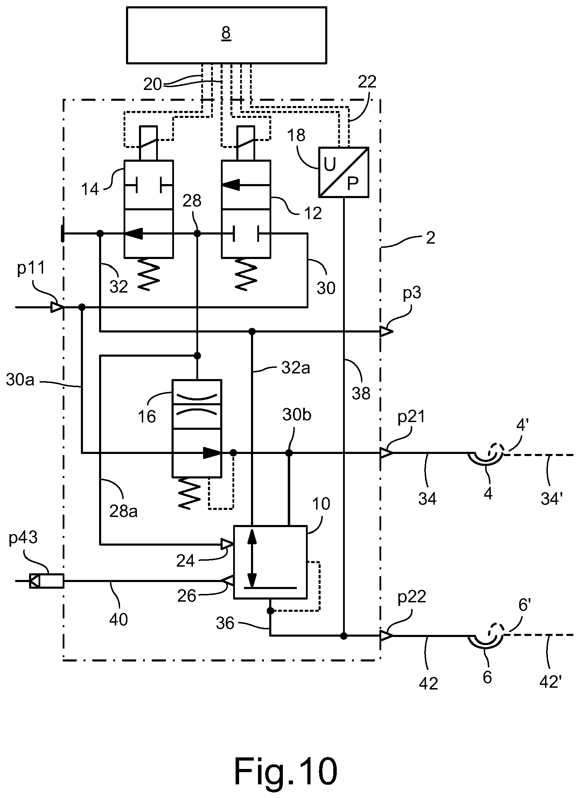

In der Fig. 10 ist demnach beispielhaft ein elektronisch steuerbares Anhängersteuerventil 2 eines Zugfahrzeugs abgebildet, welches aus der nicht vorveröffentlichten DE 10 2020 124 225.5 bekannt ist und zur Durchführung des nachfolgend beschriebenen Verfahrens zur Bremssteuerung eines Fahrzeuggespanns geeignet ist. Das dort dargestellte und auch hier genannte Fahrzeuggespann besteht aus einem Zugfahrzeug mit einer hydraulischen oder pneumatischen Bremsanlage und mindestens einem ankoppelbaren Anhängefahrzeug mit einer druckgesteuerten pneumatischen Bremsanlage.

Das Anhängersteuerventil 2 weist ein pneumatisch steuerbares Relaisventil 10, ein pneumatisch steuerbares Abrissventil 16, ein Einlassventil 12, ein Auslassventil 14 und einen pneumatischen Drucksensor 18 auf. Das Einlassventil 12 und das Auslassventil 14 sind jeweils als ein 2/2-Wege-Magnetschaltventil ausgebildet, mittels denen der an einem Steuereingang 24 des Relaisventils 10 anliegende pneumatische Steuerdruck einstellbar ist. Die Schaltmagnete des Einlassventils 12 und des Auslassventils 14 sind über elektrische Steuerleitungen 20 und der Drucksensor 18 über elektrische Sensorleitungen 22 mit einer zugeordneten elektronischen Steuereinheit 8 verbunden.

Das Einlassventil 12 ist im unbestromten Zustand geschlossen sowie im bestromten Zustand geöffnet. Das Auslassventil 14 ist im unbestromten Zustand geöffnet und im bestromten Zustand geschlossen. Eine Steuerdruckleitung 28, die von dem Ausgang des Einlassventils 12 und von dem Eingang des Auslassventils 14 zu einem Steuereingang des Abrissventils 16 sowie über einen Leitungszweig 28a an dem direkten ersten Steuereingang 24 des Relaisventils 10 führt, ist über das Einlassventil 12 mit einer internen Vorratsdruckleitung 30 und über das Auslassventil 14 mit einer zu einem Entlüftungsausgang p3 führenden Entlüftungsleitung 32 verbindbar. Eine Vorratsdruckleitung 30 ist an einen Vorratsdruckeingang p11 des Anhängersteuerventils 2 angeschlossen.

Im eingebauten Zustand des Anhängersteuerventils 2 ist an den Vorratsdruckeingang p11 eine externe Vorratsdruckleitung einer pneumatischen Druckluftversorgungsanlage des Zugfahrzeugs angeschlossen, welche bei laufendem Antriebsmotor des Zugfahrzeugs einen Vorratsdruck von etwa 7,5 × 10⁵ Pa führt. Ein von der Vorratsdruckleitung 30 abzweigender Leitungsabschnitt 30a ist über das Abrissventil 16 und einen ausgangsseitigen Leitungsabschnitt 30b an einen Vorratsdruckausgang p21 des Anhängersteuerventils 2 geführt. An diesen Vorratsdruckausgang p21 ist über eine externe Vorratsdruckleitung 34 ein Kupplungskopf "Vorrat" (rot) 4 angeschlossen. Bei angekoppeltem Anhängefahrzeug ist an den zugfahrzeugseitigen Kupplungskopf "Vorrat" 4 über einen anhängerseitigen Kupplungskopf "Vorrat" 4' eine Vorratsdruckleitung 34' des Anhängefahrzeugs angeschlossen, welche zu einem Anhängerbremsventil und mindestens einem Speicherbehälter des Anhängers führt.

Ein Vorratsdruckeingang des Relaisventils 10 ist über den abzweigenden Leitungsabschnitt 30a und den ausgangsseitigen Leitungsabschnitt 30b an die Vorratsdruckleitung 30 angeschlossen. Ein Entlüftungsausgang des Relaisventils 10 ist über eine Anschlussleitung 32a an die zu dem Entlüftungsausgang p3 führende Entlüftungsleitung 32 angeschlossen. Ein Bremssteuerausgang des Relaisventils 10 ist über eine ausgangsseitige Bremssteuerleitung 36 an einen Bremssteuerausgang p22 des Anhängersteuerventils 2 geführt.

An den Bremssteuerausgang p22 ist über eine externe Bremssteuerleitung 42 ein Kupplungskopf "Bremse" (gelb) 6 angeschlossen. Bei angekoppeltem Anhängefahrzeug ist an den zugfahrzeugseitigen Kupplungskopf "Bremse" 6 über einen anhängerseitigen Kupplungskopf "Bremse" 6' eine Bremssteuerleitung 42' des Anhängers angeschlossen, welche zu dem nicht dargestellten Anhängerbremsventil des Anhängefahrzeugs sowie, sofern vorhanden, zu einem am Heck des Anhängefahrzeugs angeordneten Kupplungskopf "Bremse" für den Anschluss der Bremssteuerleitung eines zweites Anhängefahrzeugs führt.

Der Drucksensor 18 ist über eine Sensordruckleitung 38 an die ausgangsseitige Bremssteuerleitung 36 angeschlossen. Eine weitere Steuerdruckleitung 40 ist zwischen einem invertierten Steuerdruckeingang p43 des Anhängersteuerventils 2 und einem invertierten zweiten Steuereingang 26 des Relaisventils 10 angeordnet.

Bei einem Bremsvorgang wird in der elektronischen Steuereinheit 8 aus einem von einer Bremssteuereinheit des Zugfahrzeugs übermittelten Bremswert ein Zieldruck pz bestimmt, welcher anschließend in dem Anhängersteuerventil 2 mittels eines pulsartiges Öffnens des Einlassventils 12 und des Auslassventils 14 durch das Relaisventil 10 in der Bremssteuerleitung 42, 42' eingestellt wird. Bei angekoppeltem Anhängefahrzeug führt der entsprechende Bremssteuerdruck (p_{BC} = p_{Z}) in dem Anhängerbremsventil des Anhängefahrzeugs zur Einstellung eines entsprechenden Bremsdruckes zur Betätigung der Radbremszylindern des Anhängefahrzeugs.

Um einen Bremsvorgang eines Fahrzeuggespanns optimal steuern zu können, ist die Kenntnis über den Anhängerstatus nützlich, also ob mindestens ein Anhängefahrzeug an das Zugfahrzeug angekoppelt ist, oder ob kein Anhängefahrzeug angekoppelt ist. Zudem ist dafür bei angekoppeltem Anhängefahrzeug die Kenntnis des Leitungsvolumens der von dem Bremssteuerausgang p22 des Anhängersteuerventils 2 im Zugfahrzeug bis an den Bremssteuereingang des Anhängerbremsventils im Anhängefahrzeug verlaufenden Bremssteuerleitung 42, 42' erforderlich, um den vorgegebenen Bremssteuerdruck (p_{BC} = p_{Z}) in der Bremssteuerleitung 42, 42' für eine weitgehend verzögerungsfreie Betätigung der Radbremsen des Anhängefahrzeugs schnell aufbauen zu können. So ist beispielsweise in einem Verfahren zur Bremssteuerung eines Fahrzeuggespanns gemäß der DE 10 2020 106 448 A1 hierzu vorgesehen, dass zu Beginn eines Bremsvorgangs ein den einzusteuernden Bremssteuerdruck übersteigender Druckimpuls in die Bremssteuerleitung geleitet wird, dessen Höhe und/oder Dauer in Abhängigkeit von dem ermittelten Leitungsvolumen der Bremssteuerleitung festgelegt werden.

Bei dem vorliegenden Verfahren ist allgemein vorgesehen, dass bevorzugt automatisch nach jeder Inbetriebnahme des Zugfahrzeugs und/oder nach jedem Lösen der Parkbremse im Zugfahrzeug ein in der Bremssteuerleitung 42, 42' einzustellender Zieldruck pz bestimmt und vorgegeben wird, dass dieser Zieldruck pz durch pulsartiges Öffnen des Einlassventils 12 und/oder des Auslassventils 14 in die Bremssteuerleitung 42, 42' eingesteuert wird, dass der Bremssteuerdruck p_{BC} in der Bremssteuerleitung 42, 42' während des Druckaufbaus sensorisch erfasst wird, dass aus dem Druckverlauf des Bremssteuerdruckes p_{BC} und/oder aus den Schaltzuständen des Einlassventils 12 und/oder des Auslassventils 14 bis zum Erreichen des Zieldruckes pz ein für den Anhängerstatus des Zugfahrzeugs und/oder das Leitungsvolumen V_{BC} der Bremssteuerleitung 42, 42' charakteristischer Kennwert bestimmt wird, dass dieser Kennwert mit mindestens einem vorab in Abhängigkeit des Anhängerstatus des Zugfahrzeugs und/oder des Leitungsvolumens V_{BC} der Bremssteuerleitung 42, 42' ermittelten und in einem Datenspeicher der Steuereinheit 8 abgespeicherten Referenzwert verglichen wird, und dass abhängig von dem Vergleichsergebnis der Anhängerstatus des Zugfahrzeugs und/oder das Leitungsvolumen V_{BC} der Bremssteuerleitung 42, 42' bestimmt werden.

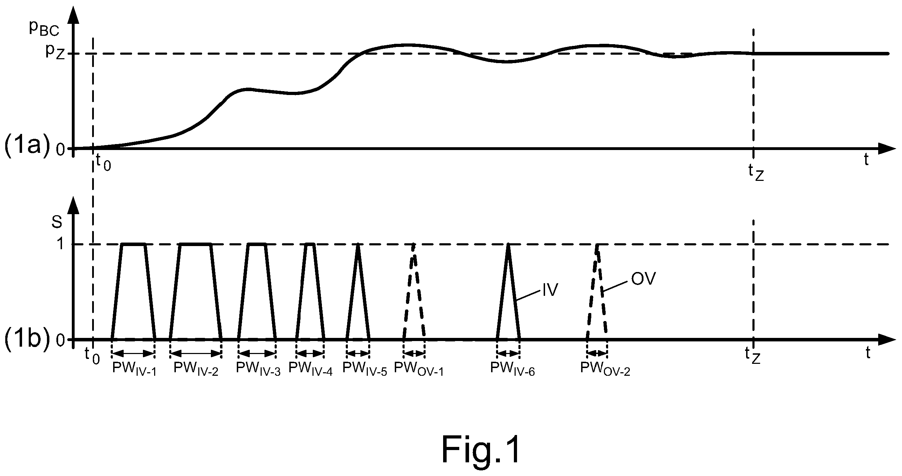

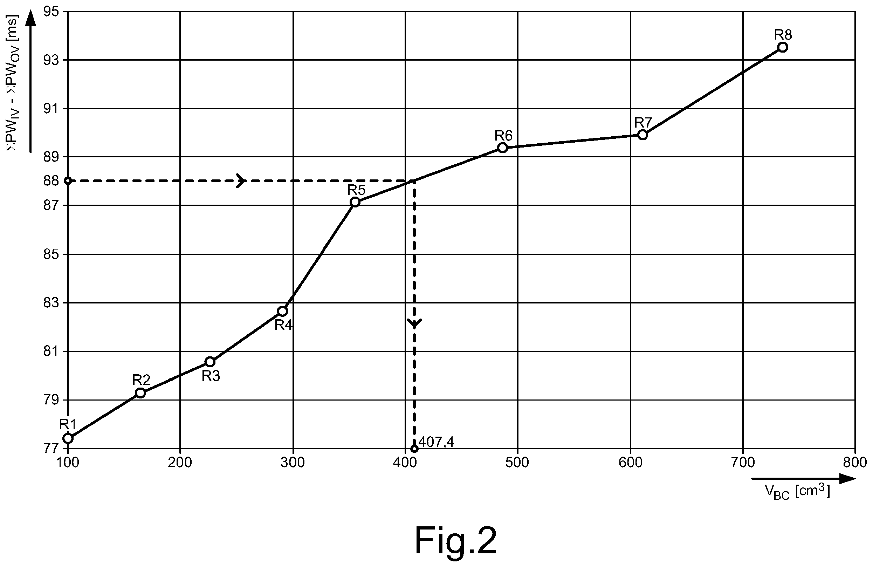

Eine erste Verfahrensvariante ist in den Diagrammen von Fig. 1 und Fig. 2 veranschaulicht. In dem oberen Teildiagramm (1a) der Fig. 1 ist der Verlauf des Bremssteuerdruckes p_{BC} während des Druckaufbaus vom Zeitpunkt t₀ bis zum Erreichen des Zieldruckes pz zum Zeitpunkt tz dargestellt. In dem unteren Teildiagramm (1b) der Fig. 1 sind die Schaltzustände (0 = geschlossen, 1 = geöffnet) des Einlassventils 12 und des Auslassventils 14 mit unterschiedlich großen Pulsweiten PW_{IV} betreffend das Einlassventil 12 und Pulsweiten PWov betreffend das Auslassventil 14 abgebildet. Die Pulse zur Betätigung des Einlassventils 12 sind mit durchgezogener Linie gezeichnet und mit der Bezeichnung IV = Inlet Valve markiert. Die Pulse zur Betätigung des Auslassventils 14 sind mit gestrichelter Linie gezeichnet und mit der Bezeichnung OV = Outlet Valve versehen. Erkennbar ist hinsichtlich des Einlassventils 12, dass die erste Pulsweite PW_{IV-1} kleiner ist als die zweite Pulsweise PW_{IV-2}, und dass die erste Pulsweite PW_{IV-1} des Einlassventils 12 größer als die dritte Pulsweite PW_{IV-3} bis sechste Pulsweite PW_{IV-6} ist. Die beiden Pulsweiten PW_{OV-1} und PW_{OV-2} zur Betätigung des Auslassventils 14 sind jeweils gleich lang.

Die Fig. 2 zeigt in einem Diagramm eine Kurve mit vorab, zum Beispiel bei der Entwicklung des Zugfahrzeugs und des Anhängefahrzeugs, ermittelten Referenzwerten R1, R2, R3, R4, R5, R6, R7, R8 in Form von Pulsweitensummendifferenzen Σ PW_{IV} - Σ PW_{OV} als Funktion des Leitungsvolumens V_{BC} einer Bremssteuerleitung des Zugfahrzeugs und des gegebenenfalls angekoppelten Anhängefahrzeugs.

Zur Bestimmung eines Kennwertes werden die Pulsweiten PW_{IV}, PWov der Öffnungspulse des Einlassventils 12 und des Auslassventils 14 gemäß Fig. 1 bis zum Erreichen des Zieldruckes p_{Z} ermittelt, separat zu Pulsweitensummen Σ PW_{IV}, Σ PW_{OV} addiert und durch eine Subtraktion eine Pulsweitensummendifferenz Σ PW_{IV} - Σ PW_{OV} als Kennwert bestimmt. Danach werden durch einen Vergleich der aktuellen Pulsweitensummendifferenz Σ PW_{IV} - Σ PW_{OV} mit den vorab für verschiedene Leitungsvolumen V_{BC} der Bremssteuerleitung als Referenzwerte ermittelten und abgespeicherten Pulsweitensummendifferenzwerten Σ PW_{IV} - Σ PW_{OV} der aktuelle Anhängerstatus des Zugfahrzeugs und das aktuelle Leitungsvolumen V_{BC} der Bremssteuerleitung 42, 42' bestimmt.

Wie Fig. 2 zeigt, weist die aktuelle Pulsweitensummendifferenz Σ PW_{IV} - Σ PW_{OV} beispielhaft einen Wert von 88 Millisekunden auf (Σ PW_{IV} - Σ PW_{OV} = 88 ms). Da dieser Wert größer ist als der vorab für ein nicht angekoppeltes Anhängerfahrzeug ermittelte Referenzwert R1 (Σ PW_{IV} - Σ PW_{OV} = 77,5 ms), ist damit der Anhängerstatus erkannt, gemäß dem ein Anhängefahrzeug an das Zugfahrzeug angekoppelt ist. Zudem liegt die aktuelle Pulsweitensummendifferenz Σ PW_{IV} - Σ PW_{OV} zwischen den Referenzwerten R5 und R6, welches durch Interpolation zu einem aktuellen Leitungsvolumen V_{BC} der Bremssteuerleitung 42, 42' von V_{BC} = 407,5 cm³ führt.

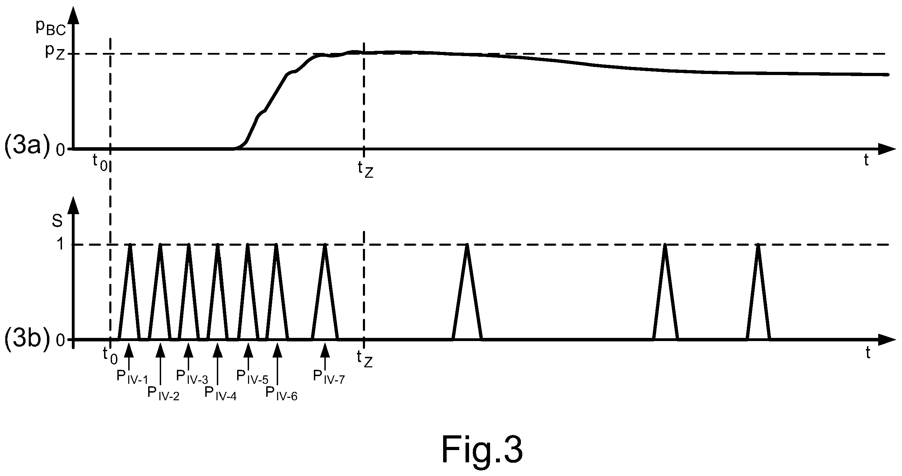

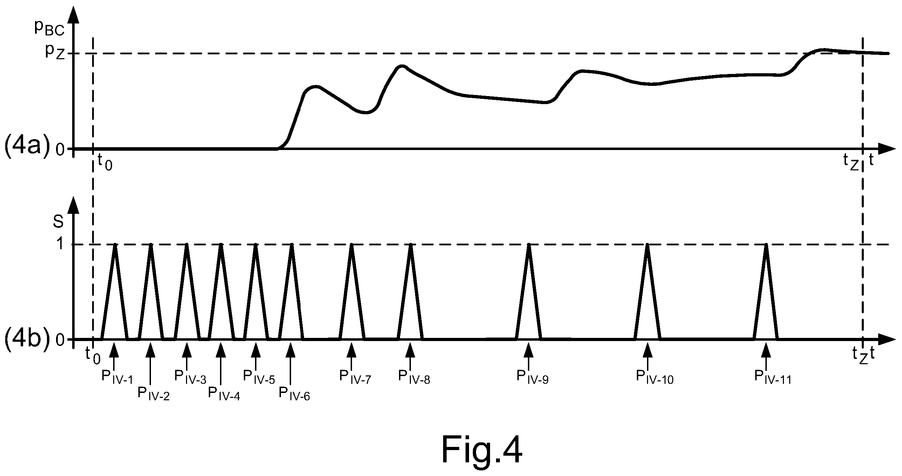

Eine zweite Verfahrensvariante ist in Fig. 3 und Fig. 4 veranschaulicht, wobei in dem Teildiagramm 3a der Fig. 3 der zeitliche Verlauf des Bremssteuerdruckes p_{BC} während des Druckaufbaus vom Zeitpunkt t₀ bis zum Erreichen des Zieldruckes pz zum Zeitpunkt tz dargestellt ist. In dem Teildiagramm 3b sind die Schaltzustände (0 = geschlossen, 1 = geöffnet) des Einlassventils 12 jeweils bei nicht angekoppeltem Anhängefahrzeug dargestellt. In Fig. 4 zeigt das dortige Teildiagramm 4a den zeitlichen Verlauf des Bremssteuerdruckes p_{BC} während des Druckaufbaus vom Zeitpunkt t₀ bis zum Erreichen des Zieldruckes pz zum Zeitpunkt tz sowie das Teildiagramm 4b die Schaltzustände (0 = geschlossen, 1 = geöffnet) des Einlassventils 12 jeweils bei angekoppeltem Anhängefahrzeug.

Zur Ermittlung eines Kennwertes werden die benötigten Öffnungspulse P_{IV-1} bis P_{IV-11} des Einlassventils 12 bis zum Erreichen des Zieldruckes p_{Z} zu einer Öffnungspulsanzahl n_{P} als Kennwert aufsummiert. Danach werden durch einen Vergleich der aktuellen Öffnungspulsanzahl n_{P} mit vorab für verschiedene Leitungsvolumen V_{BC} der Bremssteuerleitung als Referenzwerte ermittelten und abgespeicherten Öffnungspulsanzahlwerten der aktuelle Anhängerstatus des Zugfahrzeugs und das aktuelle Leitungsvolumen V_{BC} der Bremssteuerleitung 42, 42' bestimmt.

Durch einen Vergleich der Figuren 3 und 4 ist erkennbar, dass bis zur Erreichung des Zieldruckes pz in die Bremssteuerleitung 42, 42' bei angekoppeltem Anhängefahrzeug (Fig. 4) deutlich mehr Öffnungspulse P_{IV} erforderlich sind als ohne angekoppelten Anhängefahrzeug (Fig. 3). Während ohne angekoppeltem Anhängefahrzeug sieben Öffnungspulse P_{IV}-₁ bis P_{IV-7} des Einlassventils 12 zur Einstellung des Zieldruckes p_{Z} benötigt werden (n_{P} = 7), sind dazu mit angekoppeltem Anhängefahrzeug elf Öffnungspulse P_{IV-1} bis P_{IV-11} erforderlich (n_{P} = 11). Analog zur ersten Verfahrensvariante ist auch hier vorgesehen, dass der Anhängerstatus eines nicht angekoppelten Anhängefahrzeugs erkannt wird, wenn der aktuelle Kennwert, hier die aktuelle Öffnungspulsanzahl n_{P}, innerhalb einer vorgegebenen Toleranz mit einem ohne angekoppelten Anhängefahrzeug ermittelten Referenzwert übereinstimmt, und dass der Anhängerstatus eines angekoppelten Anhängefahrzeugs erkannt wird, wenn der aktuelle Kennwert, also die aktuelle Öffnungspulsanzahl n_{P}, größer als der ohne angekoppelten Anhängefahrzeug ermittelte Referenzwert ist.

Das Leitungsvolumen V_{BC} der Bremssteuerleitung wird als das Leitungsvolumen der bis zum Kupplungskopf "Bremse" 6 verlaufenden Bremssteuerleitung 42 bestimmt, wenn die aktuelle Öffnungspulsanzahl n_{P} innerhalb einer vorgegebenen Toleranz mit dem ohne angekoppelten Anhängefahrzeug ermittelten Referenzwert übereinstimmt. Dagegen wird das Leitungsvolumen V_{BC} der Bremssteuerleitung als das Leitungsvolumen eines bei angekoppeltem Anhängefahrzeug ermittelten Referenzwertes bestimmt, wenn die aktuelle Öffnungspulsanzahl n_{P} innerhalb einer vorgegebenen Toleranz mit dem betreffenden Referenzwert übereinstimmt, oder durch eine Interpolation zwischen zwei Leitungsvolumen von zwei bei angekoppeltem Anhängefahrzeug ermittelten Referenzwerten bestimmt, wenn die aktuelle Öffnungspulsanzahl n_{P} zwischen den beiden betreffenden Referenzwerten liegt.

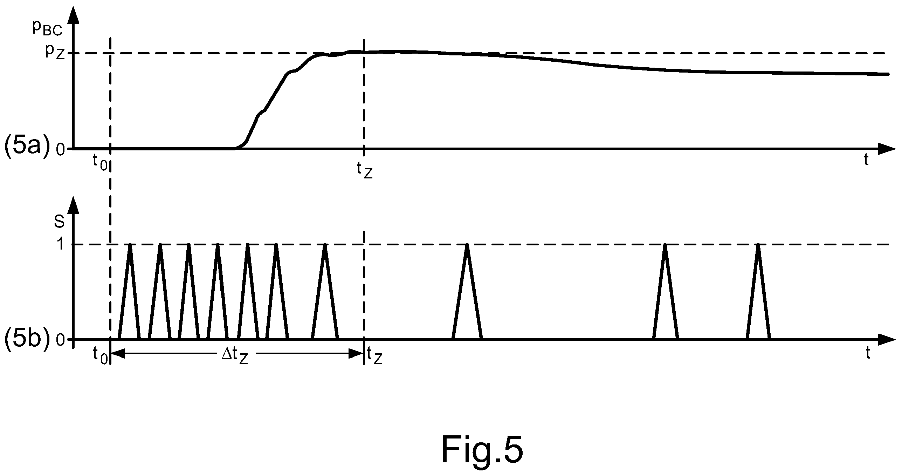

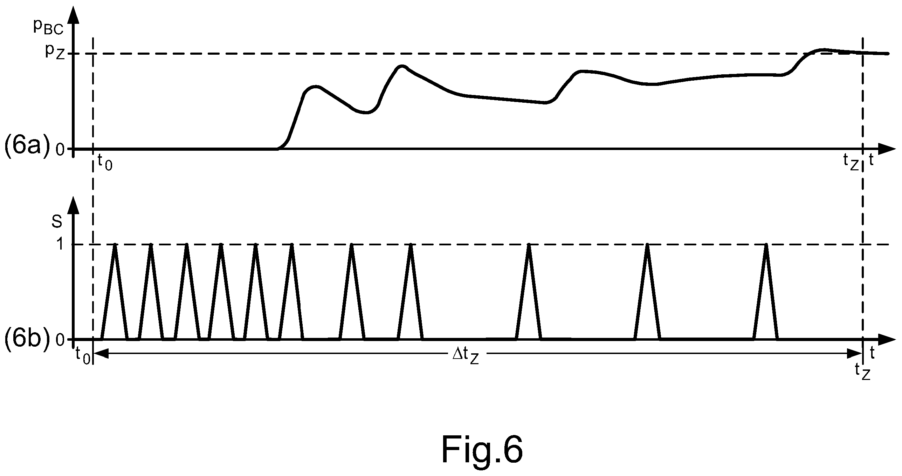

Eine vierte Verfahrensvariante ist in den Diagrammen von Fig. 5 und Fig. 6 veranschaulicht, wobei in dem Teildiagramm 5a der Fig. 5 der zeitliche Verlauf des Bremssteuerdruckes p_{BC} während des Druckaufbaus vom Zeitpunkt t₀ bis zum Erreichen des Zieldruckes pz zum Zeitpunkt tz dargestellt ist. Das Teildiagramm 5b der Fig. 5 zeigt die Schaltzustände (0 = geschlossen, 1 = geöffnet) des Einlassventils 12 jeweils bei nicht angekoppeltem Anhängefahrzeug. Die Fig. 6 zeigt in deren Teildiagramm 6a dem zeitlichen Verlauf des Bremssteuerdruckes p_{BC} während des Druckaufbaus vom Zeitpunkt t₀ bis zum Erreichen des Zieldruckes p_{Z} zum Zeitpunkt tz und in dem Teildiagramm 6b die Schaltzustände (0 = geschlossen, 1 = geöffnet) des Einlassventils 12 jeweils bei angekoppeltem Anhängefahrzeug.

Zur Ermittlung eines Kennwertes wird gemäß den beiden Figuren 5 und 6 jeweils die Zeitspanne Δt_{Z} bis zum Erreichen des Zieldruckes pz bestimmt, welche dann als Druckaufbauzeit den hier relevanten Kennwert bildet. Durch einen Vergleich der aktuellen Druckaufbauzeit Δt_{Z} mit vorab für verschiedene Leitungsvolumen der Bremssteuerleitung als Referenzwerte ermittelten und abgespeicherten Druckaufbauzeitwerten werden der aktuelle Anhängerstatus des Zugfahrzeugs und/oder das aktuelle Leitungsvolumen V_{BC} der Bremssteuerleitung 42, 42' bestimmt.

Durch einen Vergleich der beiden Figuren 5 und 6 ist erkennbar, dass zum Aufbau des Zieldruckes pz in die Bremssteuerleitung 42, 42' bei angekoppeltem Anhängefahrzeug (Fig. 6) eine deutlich längere Druckaufbauzeit Δt_{Z} erforderlich ist als ohne angekoppelten Anhängefahrzeug (Fig. 5). Analog zu den ersten beiden Verfahrensvarianten ist auch hier vorgesehen, dass der Anhängerstatus eines nicht angekoppelten Anhängefahrzeugs erkannt wird, wenn der aktuelle Kennwert, hier die aktuelle Druckaufbauzeit Δt_{Z}, innerhalb einer vorgegebenen Toleranz mit einem ohne angekoppelten Anhängefahrzeug ermittelten Referenzwert übereinstimmt, und dass der Anhängerstatus eines angekoppelten Anhängefahrzeugs erkannt wird, wenn der aktuelle Kennwert, also die aktuelle Druckaufbauzeit Δt_{Z}, größer als der ohne angekoppelten Anhängefahrzeug ermittelte Referenzwert ist.

Das Leitungsvolumen V_{BC} der Bremssteuerleitung wird als das Leitungsvolumen der bis zum Kupplungskopf "Bremse" 6 verlaufenden Bremssteuerleitung 42 bestimmt, wenn die aktuelle Druckaufbauzeit Δt_{Z} innerhalb einer vorgegebenen Toleranz mit dem ohne angekoppelten Anhängefahrzeug ermittelten Referenzwert übereinstimmt. Dagegen wird das Leitungsvolumen V_{BC} der Bremssteuerleitung als das Leitungsvolumen eines bei angekoppeltem Anhängefahrzeug ermittelten Referenzwertes bestimmt, wenn die aktuelle Druckaufbauzeit Δt_{Z} innerhalb einer vorgegebenen Toleranz mit dem betreffenden Referenzwert übereinstimmt, oder durch eine Interpolation zwischen zwei Leitungsvolumen von zwei bei angekoppeltem Anhängefahrzeug ermittelten Referenzwerten bestimmt, wenn die aktuelle Druckaufbauzeit Δt_{Z} zwischen den beiden betreffenden Referenzwerten liegt.

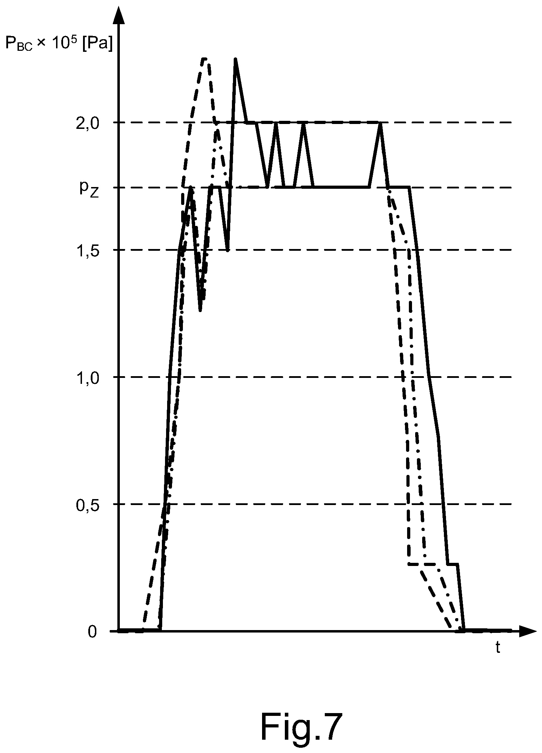

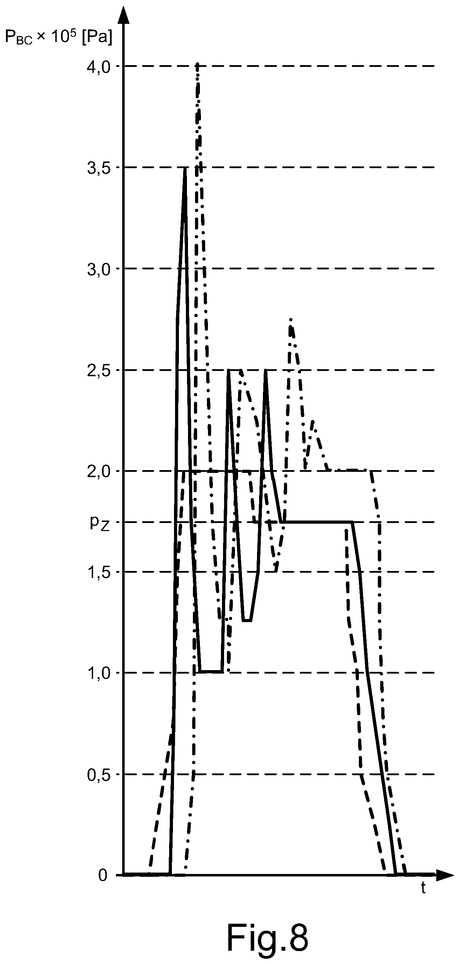

Mit den Diagrammen der Figuren 7 und 8 wird nachfolgend der Verfahrensablauf einer fünften Verfahrensvariante veranschaulicht. Die Diagramme zeigen jeweils die zeitlichen Verläufe des Bremssteuerdruckes p_{BC} in der Bremssteuerleitung 42, 42', welcher einen Zieldruck p_{Z} von 1,7 × 10⁵ Pa erreichen soll. In den Diagrammen ist mit gestrichelter Linie der Druckverlauf in der Bremssteuerleitung 42, 42' ohne ein an dem Zugfahrzeug angekoppelten Anhängefahrzeug dargestellt. Der mit durchgezogener Linie gezeichneter Druckverlauf zeigt die Situation mit einem an das Zugfahrzeug angekoppeltem Anhängefahrzeug sowie leerem Speicherbehälter Sz des Zugfahrzeugs, und der mit einer Strich-Punkt-Linie dargestellte Druckverlauf zeigt die Situation mit einem angekoppelten Anhängefahrzeug sowie leerem Speicherbehälter S_{A} des Anhängefahrzeugs.

Die in der Fig. 7 dargestellten Druckverläufe sind bei einer an den Vorratsdruckeingang p11 angeschlossenen Vorratsdruckleitung gemessen worden, in welcher ein Vorratsdruck von p_{V} = 4 × 10⁵ Pa herrscht. Die in der Fig. 8 gezeigten Druckverläufe sind bei einem an den Vorratsdruckeingang p11 anliegenden Vorratsdruck von p_{V} = 6 × 10⁵ Pa ermittelt worden. Durch einen Vergleich der Diagramme der Figuren 7 und 8 kann der Einfluss unterschiedlich hoher Vorratsdrücke pv veranschaulicht werden.

Bei einer längeren Fahrtunterbrechung kann der Vorratsdruck p_{V} in den Vorratsleitungen und den an diese angeschlossenen Speicherbehältern eines Zugfahrzeugs und/oder eines Anhängefahrzeugs leckagebedingt absinken, sodass bei der Inbetriebnahme des Zugfahrzeugs zunächst ein relativ niedriger Vorratsdruck p_{V} zur Verfügung steht, durch welchen die Belüftung der Bremssteuerleitung 42, 42' auf den Zieldruck pz verzögert wird.

Zur Ermittlung eines Kennwertes, welcher zur Bestimmung des Volumens der angeschlossenen Bremssteuerleitung geeignet ist, und mit dem feststellbar ist, ob ein Anhängefahrzeug pneumatisch an dem Zugfahrzeug angeschlossen ist, sieht diese Verfahrensvariante vor, dass die Anzahl und/oder die mittlere Amplitude von Druckschwingungen des Bremssteuerdruckes p_{BC} bis zum Erreichen des Zieldruckes pz als eine den Kennwert bildende Schwingungsanzahl ns und/oder mittlere Schwingungsamplitude A_{S_m} erfasst wird.

Durch einen Vergleich der aktuellen Schwingungsanzahl ns und/oder der aktuellen Schwingungsamplitude A_{S_m} mit vorab für verschiedene Leitungsvolumen der Bremssteuerleitung als Referenzwerte ermittelten und abgespeicherten Schwingungsanzahlwerten und/oder Schwingungsamplitudenwerten werden dann der aktuelle Anhängerstatus des Zugfahrzeugs und/oder das aktuelle Leitungsvolumen V_{BC} der Bremssteuerleitung 42, 42' bestimmt.

Der Anhängerstatus hinsichtlich eines nicht angekoppelten Anhängefahrzeugs wird dann erkannt, wenn die aktuelle Schwingungsanzahl ns und/oder die aktuelle mittlere Schwingungsamplitude A_{S_m} innerhalb einer vorgegebenen Toleranz mit einem ohne angekoppeltes Anhängefahrzeug ermittelten Referenzwert übereinstimmt. Der Anhängerstatus hinsichtlich eines angekoppelten Anhängefahrzeugs wird dann erkannt, wenn die aktuelle Schwingungsanzahl ns und/oder die aktuelle mittlere Schwingungsamplitude A_{S_m} größer ist als der ohne angekoppeltes Anhängefahrzeug ermittelte Referenzwert.

Das Leitungsvolumen V_{BC} der Bremssteuerleitung wird als das Leitungsvolumen der bis zum Kupplungskopf "Bremse" 6 verlaufenden Bremssteuerleitung 42 bestimmt, wenn die aktuelle Schwingungsanzahl ns und/oder die aktuelle mittlere Schwingungsamplitude A_{S_m} innerhalb einer vorgegebenen Toleranz mit einem ohne angekoppelten Anhängefahrzeug ermittelten Referenzwert übereinstimmt. Dagegen wird das Leitungsvolumen V_{BC} der Bremssteuerleitung als das Leitungsvolumen eines bei angekoppeltem Anhängefahrzeug ermittelten Referenzwertes bestimmt, wenn die aktuelle Schwingungsanzahl ns und/oder die aktuelle mittlere Schwingungsamplitude A_{S_m} innerhalb einer vorgegebenen Toleranz mit dem betreffenden Referenzwert übereinstimmt, oder durch eine Interpolation zwischen zwei Leitungsvolumen von zwei bei angekoppeltem Anhängefahrzeug ermittelten Referenzwerten bestimmt, wenn die aktuelle Schwingungsanzahl ns und/oder die aktuelle mittlere Schwingungsamplitude A_{S_m} zwischen den beiden betreffenden Referenzwerten liegt.

Aus den Kurvenverläufen des Bremssteuerdruckes p_{BC} in den Diagrammen von Fig. 7 und Fig. 8 geht jeweils hervor, dass die Schwingungsanzahl ns und die mittlere Schwingungsamplitude A_{S_m} mit angekoppeltem Anhängefahrzeug größer sind als ohne angekoppeltem Anhängefahrzeug, sowie mit leeren Speicherbehältern S_{Z}, S_{A} des Zugfahrzeugs und des Anhängefahrzeugs größer sind als nur mit leerem Speicherbehälter Sz des Zugfahrzeugs. Durch einen Vergleich des Diagramms für den Vorratsdruck p_{V} = 4 × 10⁵ Pa gemäß Fig. 7 und des Diagramms für den Vorratsdruck p_{V} = 6 × 10⁵ Pa gemäß Fig. 8 ergibt sich zudem, dass die Schwingungsanzahl ns sowie die mittlere Schwingungsamplitude A_{S_m} mit zunehmendem Vorratsdruck pv ansteigen.

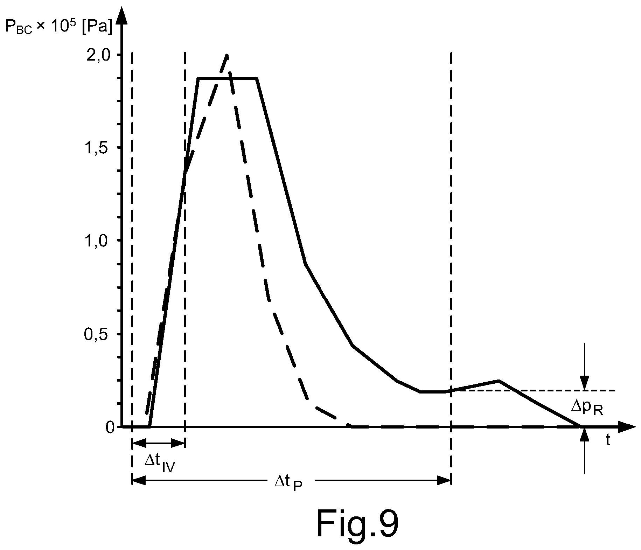

In dem Diagramm der Fig. 9 ist eine sechste Verfahrensvariante veranschaulicht, wobei das Diagramm die zeitlichen Verläufe eines in die Bremssteuerleitung 42, 42' eingesteuerten Druckimpulses bei nicht angekoppeltem Anhängefahrzeug (mit durchgezogener Linie gezeichnet) und bei angekoppeltem Anhängefahrzeug (mit durchgezogener Linie gezeichnet) enthält. Durch den Vergleich der beiden Druckverläufe ist erkennbar, dass nach einer Zeitspanne Δt_{P} bei nicht angekoppeltem Anhängefahrzeug ein Restdruck Δp_{R} zu verzeichnen ist, wogegen bei angekoppeltem Anhängefahrzeug kein Restdruck erkennbar ist.

Diese Verfahrensvariante sieht vor, dass ein mit festgelegter Öffnungsdauer Δt_{IV} des Einlassventils 12 in die Bremssteuerleitung 42, 42' einzusteuernder pneumatischer Druckimpuls vorgegeben wird, dass der Druckimpuls durch ein pulsartiges Öffnen des Einlassventils 12 in die Bremssteuerleitung 42, 42' in dieser erzeugt wird, dass der nach einer vorgegebenen Zeitspanne Δt_{P} nach dem Schließen des Einlassventils 12 in der Bremssteuerleitung 42, 42' vorliegende Bremssteuerdruck p_{BC} als Restdruck Δp_{R} sensorisch gemessen wird, dass der Restdruck Δp_{R} mit mindestens einem vorab in Abhängigkeit des Anhängerstatus des Zugfahrzeugs und/oder des Leitungsvolumens der Bremssteuerleitung 42, 42' ermittelten und in einem Datenspeicher der Steuereinheit 8 abgespeicherten Referenzdruckwert verglichen wird, und dass abhängig von dem Vergleichsergebnis der Anhängerstatus des Zugfahrzeugs und/oder das Leitungsvolumen V_{BC} der Bremssteuerleitung 42, 42' bestimmt werden.

Der Anhängerstatus eines nicht angekoppelten Anhängers wird dann erkannt, wenn der aktuelle Restdruck Δp_{R} innerhalb einer vorgegebenen Toleranz mit einem ohne angekoppelten Anhängefahrzeug ermittelten Referenzdruckwert übereinstimmt, und der Anhängerstatus eines angekoppelten Anhängers wird dann erkannt, wenn der aktuelle Restdruck Δp_{R} kleiner ist als der ohne angekoppelten Anhängefahrzeug ermittelte Referenzdruckwert.

Das Leitungsvolumen V_{BC} der Bremssteuerleitung 42, 42' wird als das Leitungsvolumen der bis zum Kupplungskopf "Bremse" 6 verlaufenden Bremssteuerleitung 42 bestimmt, wenn der aktuelle Restdruck Δp_{R} innerhalb einer vorgegebenen Toleranz mit dem ohne angekoppelten Anhängefahrzeug ermittelten Referenzdruckwert übereinstimmt. Dagegen wird das Leitungsvolumen V_{BC} der Bremssteuerleitung 42, 42' als das Leitungsvolumen eines bei angekoppeltem Anhängefahrzeug ermittelten Referenzdruckwertes bestimmt, wenn der aktuelle Restdruck Δp_{R} innerhalb einer vorgegebenen Toleranz mit dem betreffenden Referenzdruckwert übereinstimmt, oder durch eine Interpolation zwischen zwei Leitungsvolumen von zwei bei angekoppeltem Anhängefahrzeug ermittelten Referenzdruckwerten bestimmt, wenn der aktuelle Restdruck Δp_{R} zwischen den beiden betreffenden Referenzdruckwerten liegt.

### Bezugszeichen (Teil der Beschreibung)

- 2: Anhängersteuerventil
- 4, 4': Kupplungskopf "Vorrat" (rot)
- 6, 6': Kupplungskopf "Bremse" (gelb)
- 8: Elektronische Steuereinheit
- 10: Relaisventil
- 12: Einlassventil, 2/2-Wege-Magnetventil
- 14: Auslassventil, 2/2-Wege-Magnetventil
- 16: Abrissventil
- 18: Drucksensor
- 20: Steuerleitungen
- 22: Sensorleitungen
- 24: Direkter Steuereingang
- 26: Invertierter Steuereingang
- 28: Steuerdruckleitung
- 28a: Leitungszweig
- 30: Vorratsdruckleitung
- 30a, 30b: Leitungsabschnitte
- 32: Entlüftungsleitung
- 32a: Anschlussleitung
- 34, 34': Vorratsdruckleitung
- 36: Bremssteuerleitung
- 38: Sensordruckleitung
- 40: Steuerdruckleitung
- 42, 42': Bremssteuerleitung
- A_{S_m}: Mittlere Schwingungsamplitude
- IV: Inlet Valve, Einlassventil
- n_{P}: Öffnungspulsanzahl
- n_{P_IV}: Öffnungspulsanzahl des Einlassventils
- n_{P_OV}: Öffnungspulsanzahl des Auslassventils
- n_{S}: Schwingungsanzahl
- OV: Outlet Valve, Auslassventil
- p₃: Entlüftungsausgang
- p₁₁: Vorratsdruckeingang
- p₂₁: Vorratsdruckausgang
- p₂₂: Bremssteuerausgang
- p₄₃: Invertierter Steuerdruckeingang
- p_{BC}: Bremssteuerdruck
- pv: Vorratsdruck
- pz: Zieldruck
- P_{IV}: Öffnungspuls des Einlassventils
- P_{OV}: Öffnungspuls des Auslassventils
- PW_{IV}: Pulsweite eines Öffnungspulses des Einlassventils
- PWov: Pulsweite eines Öffnungspulses des Auslassventils
- R1 - R8: Referenzwerte
- S: Schaltzustand des Einlass- oder Auslassventils
- S_{A}: Druckspeicher des Anhängers
- S_{Z}: Druckspeicher des Zugfahrzeugs
- t: Zeit
- t₀: Zeitpunkt zu Beginn der Belüftung
- t_{Z}: Zeitpunkt bei Erreichen des Zieldruckes
- V_{BC}: Leitungsvolumen der Bremssteuerleitung
- Δp_{R}: Restdruck
- Δt_{IV}: Öffnungsdauer des Einlassventils
- Δt_{P}: Zeitspanne bis Restdruckmessung
- Δt_{Z}: Zeitspanne bis Druckaufbau, Druckaufbauzeit

## Patentansprüche

1. Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil (2) genutzt wird, welches zumindest zwei von einer elektronischen Steuereinheit (8) ansteuerbare Magnetschaltventile aufweist, welche als Einlassventil (12) und Auslassventil (14) ausgebildet sind, wobei mittels des Bremssteuerventils (2) ein Bremssteuerdruck (p_{BC}) in einer von einem Bremssteuerausgang (p22) des Bremssteuerventils (2) bis zu einem Kupplungskopf "Bremse" (6) des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung (42, 42') erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen (V_{BC}) der Bremssteuerleitung (42, 42') ist, wobei in der Bremssteuerleitung (42, 42') einzustellender Zieldruck (p_{Z}) vorgegeben wird, wobei dieser Zieldruck (p_{Z}) durch pulsartiges Öffnen des Einlassventils (12) und/oder durch pulsartiges Öffnen des Auslassventils (14) in die Bremssteuerleitung (42, 42') eingesteuert wird, wobei der Bremssteuerdruck (psc) in der Bremssteuerleitung (42, 42') während des Druckaufbaus sensorisch gemessen wird, wobei aus dem zeitlichen Druckverlauf des Bremssteuerdruckes (p_{BC}) und/oder dem zeitlichen Verlauf der Schaltzustände des Einlassventils (12) und/oder des Auslassventils (14) bis zum Erreichen des Zieldruckes (pz) ein für den Anhängerstatus des Zugfahrzeugs und/oder das Leitungsvolumen (V_{BC}) der Bremssteuerleitung (42, 42') charakteristischer Kennwert bestimmt wird, wobei dieser Kennwert mit mindestens einem vorab in Abhängigkeit von dem Anhängerstatus des Zugfahrzeugs und/oder des Leitungsvolumens (V_{BC}) der Bremssteuerleitung (42, 42') ermittelten sowie in einem Datenspeicher der Steuereinheit (8) abgespeicherten Referenzwert verglichen wird, wobei abhängig von dem Vergleichsergebnis der Anhängerstatus des Zugfahrzeugs und/oder das Leitungsvolumen (V_{BC}) der Bremssteuerleitung (42, 42') bestimmt werden, **dadurch gekennzeichnet, dass** die Pulsweiten (PW_{IV}, PW_{OV}) der Öffnungspulse des Einlassventils (12) und des Auslassventils (14) bis zum Erreichen des Zieldruckes (p_{Z}) erfasst und jeweils separat zu einer Pulsweitensumme
(Σ PW_{IV}) des Einlassventils (12) und zu einer Pulsweitensumme (Σ PW_{OV}) des Auslassventils (14) addiert werden, dass durch eine Subtraktion der Pulsweitensumme (Σ PWov) des Auslassventils (14) von der Pulsweitensumme (Σ PW_{IV}) des Einlassventils (12) eine Pulsweitensummendifferenz (Σ PW_{IV} - Σ PW_{OV}) als Kennwert bestimmt wird, und dass durch einen Vergleich der aktuellen Pulsweitensummendifferenz (Σ PW_{IV} -Σ PW_{OV}) mit vorab für verschiedene Leitungsvolumen der Bremssteuerleitung als Referenzwerte (R1, R2, R3, R4, R5, R6, R7, R8) ermittelten und abgespeicherten Pulsweitensummendifferenzwerten der aktuelle Anhängerstatus des Zugfahrzeugs und/oder das aktuelle Leitungsvolumen (V_{BC}) der Bremssteuerleitung (42, 42') bestimmt werden.

2. Verfahren nach Anspruch 1, **dadurch gekennzeichnet, dass** der Anhängerstatus hinsichtlich eines nicht angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit einem ohne angekoppelten Anhängefahrzeug ermittelten Referenzwert übereinstimmt, und dass der Anhängerstatus hinsichtlich eines angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) größer als der ohne angekoppelten Anhängefahrzeugs ermittelte Referenzwert ist.

3. Verfahren nach einem der Ansprüche 1 bis 2, **dadurch gekennzeichnet, dass** das Leitungsvolumen (V_{BC}) der Bremssteuerleitung (42, 42') als das Leitungsvolumen einer bis zum Kupplungskopf "Bremse" (6) verlaufenden Bremssteuerleitung (42) bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem ohne angekoppelten Anhängefahrzeug ermittelten Referenzwert übereinstimmt, und dass das Leitungsvolumen (V_{BC}) der Bremssteuerleitung (42, 42') als das Leitungsvolumen eines bei angekoppeltem Anhängefahrzeug ermittelten Referenzwertes bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem betreffenden Referenzwert übereinstimmt, oder durch eine Interpolation zwischen zwei Leitungsvolumenwerten von zwei bei angekoppeltem Anhängefahrzeug ermittelten Referenzwerten bestimmt wird, wenn der aktuelle Kennwert (Σ PW_{IV} - Σ PW_{OV}, n_{P}, Δp_{Z}, n_{S}, A_{S_m}) zwischen den beiden betreffenden Referenzwerten liegt.

4. Verfahren nach einem der Ansprüche 1 bis 3, **dadurch gekennzeichnet, dass** zur Ermittlung des aktuellen Anhängerstatus des Zugfahrzeugs und/oder des aktuellen Leitungsvolumens (V_{BC}) der Bremssteuerleitung (42, 42') zusätzlich der in einer Vorratsleitung des Zugfahrzeugs aktuell anliegende Vorratsdruck (p_{V}) gemessen wird, und dass der Vergleich des jeweiligen Kennwertes (Σ PW_{IV} - Σ PW_{OV}, n_{P}, Δp_{Z}, n_{S}, A_{S_m}) beziehungsweise des Restdruckes (Δp_{R}) mit vorab für den entsprechenden Vorratsdruck (pv) ermittelten sowie abgespeicherten Referenzwerten beziehungsweise Referenzdruckwerten erfolgt.

5. Verfahren nach einem der Ansprüche 1 bis 4, **dadurch gekennzeichnet, dass** die Ermittlung des aktuellen Anhängerstatus des Zugfahrzeugs und/oder des aktuellen Leitungsvolumens (V_{BC}) der Bremssteuerleitung (42, 42') automatisch nach jeder Inbetriebnahme des Zugfahrzeugs und/oder nach jedem Lösen der Parkbremse im Zugfahrzeug durchgeführt wird.

6. Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil (2) genutzt wird, welches zumindest zwei von einer elektronischen Steuereinheit (8) ansteuerbare Magnetschaltventile aufweist, welche als Einlassventil (12) und Auslassventil (14) ausgebildet sind, wobei mittels des Bremssteuerventils (2) ein Bremssteuerdruck (p_{BC}) in einer von einem Bremssteuerausgang (p22) des Bremssteuerventils (2) bis zu einem Kupplungskopf "Bremse" (6) des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung (42, 42') erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen (V_{BC}) der Bremssteuerleitung (42, 42') ist, wobei in der Bremssteuerleitung (42, 42') einzustellender Zieldruck (p_{Z}) vorgegeben wird, wobei dieser Zieldruck (p_{Z}) durch pulsartiges Öffnen des Einlassventils (12) und/oder durch pulsartiges Öffnen des Auslassventils (14) in die Bremssteuerleitung (42, 42') eingesteuert wird, wobei der Bremssteuerdruck (psc) in der Bremssteuerleitung (42, 42') während des Druckaufbaus sensorisch gemessen wird, wobei aus dem zeitlichen Druckverlauf des Bremssteuerdruckes (p_{BC}) und/oder dem zeitlichen Verlauf der Schaltzustände des Einlassventils (12) und/oder des Auslassventils (14) bis zum Erreichen des Zieldruckes (pz) ein für den Anhängerstatus des Zugfahrzeugs und/oder das Leitungsvolumen (V_{BC}) der Bremssteuerleitung (42, 42') charakteristischer Kennwert bestimmt wird, wobei dieser Kennwert mit mindestens einem vorab in Abhängigkeit von dem Anhängerstatus des Zugfahrzeugs und/oder des Leitungsvolumens (V_{BC}) der Bremssteuerleitung (42, 42') ermittelten sowie in einem Datenspeicher der Steuereinheit (8) abgespeicherten Referenzwert verglichen wird, wobei abhängig von dem Vergleichsergebnis der Anhängerstatus des Zugfahrzeugs und/oder das Leitungsvolumen (V_{BC}) der Bremssteuerleitung (42, 42') bestimmt werden, **dadurch gekennzeichnet, dass** die Öffnungspulse (P_{IV}) des Einlassventils (12) und/oder die Öffnungspulse (Pov) des Auslassventils (14) bis zum Erreichen des Zieldruckes (pz) ermittelt sowie zu einer Öffnungspulsanzahl (n_{P}) als Kennwert aufsummiert werden, und dass durch einen Vergleich der aktuellen Öffnungspulsanzahl mit vorab für verschiedene Leitungsvolumen der Bremssteuerleitung als Referenzwerte ermittelten sowie abgespeicherten Öffnungspulsanzahlwerten der aktuelle Anhängerstatus des Zugfahrzeugs und/oder das aktuelle Leitungsvolumen (V_{BC}) der Bremssteuerleitung (42, 42') bestimmt werden.

7. Verfahren nach Anspruch 6, **dadurch gekennzeichnet, dass** der Anhängerstatus hinsichtlich eines nicht angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit einem ohne angekoppelten Anhängefahrzeug ermittelten Referenzwert übereinstimmt, und dass der Anhängerstatus hinsichtlich eines angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) größer als der ohne angekoppelten Anhängefahrzeugs ermittelte Referenzwert ist.

8. Verfahren nach einem der Ansprüche 6 bis 7, **dadurch gekennzeichnet, dass** das Leitungsvolumen (V_{BC}) der Bremssteuerleitung (42, 42') als das Leitungsvolumen einer bis zum Kupplungskopf "Bremse" (6) verlaufenden Bremssteuerleitung (42) bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem ohne angekoppelten Anhängefahrzeug ermittelten Referenzwert übereinstimmt, und dass das Leitungsvolumen (V_{BC}) der Bremssteuerleitung (42, 42') als das Leitungsvolumen eines bei angekoppeltem Anhängefahrzeug ermittelten Referenzwertes bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem betreffenden Referenzwert übereinstimmt, oder durch eine Interpolation zwischen zwei Leitungsvolumenwerten von zwei bei angekoppeltem Anhängefahrzeug ermittelten Referenzwerten bestimmt wird, wenn der aktuelle Kennwert (Σ PW_{IV} - Σ PW_{OV}, n_{P}, Δp_{Z}, n_{S}, A_{S_m}) zwischen den beiden betreffenden Referenzwerten liegt.

9. Verfahren nach einem der Ansprüche 6 bis 8, **dadurch gekennzeichnet, dass** zur Ermittlung des aktuellen Anhängerstatus des Zugfahrzeugs und/oder des aktuellen Leitungsvolumens (V_{BC}) der Bremssteuerleitung (42, 42') zusätzlich der in einer Vorratsleitung des Zugfahrzeugs aktuell anliegende Vorratsdruck (p_{V}) gemessen wird, und dass der Vergleich des jeweiligen Kennwertes (Σ PW_{IV} - Σ PW_{OV}, n_{P}, Δp_{Z}, n_{S}, A_{S_m}) beziehungsweise des Restdruckes (Δp_{R}) mit vorab für den entsprechenden Vorratsdruck (pv) ermittelten sowie abgespeicherten Referenzwerten beziehungsweise Referenzdruckwerten erfolgt.

10. Verfahren nach einem der Ansprüche 6 bis 9, **dadurch gekennzeichnet, dass** die Ermittlung des aktuellen Anhängerstatus des Zugfahrzeugs und/oder des aktuellen Leitungsvolumens (V_{BC}) der Bremssteuerleitung (42, 42') automatisch nach jeder Inbetriebnahme des Zugfahrzeugs und/oder nach jedem Lösen der Parkbremse im Zugfahrzeug durchgeführt wird.

11. Verfahren zur Bremssteuerung eines Fahrzeuggespanns, welches aus einem Zugfahrzeug mit einer hydraulischen oder pneumatischen Bremsanlage sowie mindestens einem ankoppelbaren Anhängefahrzeug mit einer druckgesteuerten pneumatischen Bremsanlage besteht, und bei dem ein im Zugfahrzeug angeordnetes elektronisch steuerbares Bremssteuerventil (2) genutzt wird, welches zumindest zwei von einer elektronischen Steuereinheit (8) ansteuerbare Magnetschaltventile aufweist, welche als Einlassventil (12) und Auslassventil (14) ausgebildet sind, wobei mittels des Bremssteuerventils (2) ein Bremssteuerdruck (p_{BC}) in einer von einem Bremssteuerausgang (p22) des Bremssteuerventils (2) bis zu einem Kupplungskopf "Bremse" (6) des Zugfahrzeugs oder bis zu einem Anhängerbremsventil des Anhängefahrzeugs und/oder einem Kupplungskopf "Bremse" am Heck des Anhängefahrzeugs verlaufende Bremssteuerleitung (42, 42') erzeugbar ist, und bei dem zur Ermittlung des aktuellen Anhängerstatus festgestellt wird, ob das Zugfahrzeug mit einem Anhängefahrzeug verbunden ist und/oder wie groß das Leitungsvolumen (V_{BC}) der Bremssteuerleitung (42, 42') ist, wobei in der Bremssteuerleitung (42, 42') einzustellender Zieldruck (p_{Z}) vorgegeben wird, wobei dieser Zieldruck (p_{Z}) durch pulsartiges Öffnen des Einlassventils (12) und/oder durch pulsartiges Öffnen des Auslassventils (14) in die Bremssteuerleitung (42, 42') eingesteuert wird, wobei der Bremssteuerdruck (psc) in der Bremssteuerleitung (42, 42') während des Druckaufbaus sensorisch gemessen wird, wobei aus dem zeitlichen Druckverlauf des Bremssteuerdruckes (p_{BC}) und/oder dem zeitlichen Verlauf der Schaltzustände des Einlassventils (12) und/oder des Auslassventils (14) bis zum Erreichen des Zieldruckes (pz) ein für den Anhängerstatus des Zugfahrzeugs und/oder das Leitungsvolumen (V_{BC}) der Bremssteuerleitung (42, 42') charakteristischer Kennwert bestimmt wird, wobei dieser Kennwert mit mindestens einem vorab in Abhängigkeit von dem Anhängerstatus des Zugfahrzeugs und/oder des Leitungsvolumens (V_{BC}) der Bremssteuerleitung (42, 42') ermittelten sowie in einem Datenspeicher der Steuereinheit (8) abgespeicherten Referenzwert verglichen wird, wobei abhängig von dem Vergleichsergebnis der Anhängerstatus des Zugfahrzeugs und/oder das Leitungsvolumen (V_{BC}) der Bremssteuerleitung (42, 42') bestimmt werden, **dadurch gekennzeichnet, dass** die Anzahl der Öffnungspulse (P_{IV}, Pov) des Einlassventils (12) und des Auslassventils (14) bis zum Erreichen des Zieldruckes (p_{Z}) erfasst und jeweils separat zu einer Öffnungspulsanzahl (Σ n_{P_IV}) des Einlassventils (12) und zu einer Öffnungspulsanzahl (Σ n_{P_OV}) des Auslassventils (14) addiert werden, dass durch eine Subtraktion der Öffnungspulsanzahl (Σ n_{P_OV}) des Auslassven-
tils (14) von der Öffnungspulsanzahl (Σ n_{P_IV}) des Einlassventils (12) eine Pulsanzahldifferenz (Σ n_{P_IV} - Σ n_{P_OV}) als Kennwert bestimmt wird, und dass durch einen Vergleich der aktuellen Pulsanzahldifferenz (Σ n_{P_IV} - Σ n_{P_OV}) mit vorab für verschiedene Leitungsvolumen der Bremssteuerleitung als Referenzwerte ermittelten und abgespeicherten Pulsanzahldifferenzwerten der aktuelle Anhängerstatus des Zugfahrzeugs und/oder das aktuelle Leitungsvolumen (V_{BC}) der Bremssteuerleitung (42, 42') bestimmt werden.

12. Verfahren nach Anspruch 11, **dadurch gekennzeichnet, dass** der Anhängerstatus hinsichtlich eines nicht angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit einem ohne angekoppelten Anhängefahrzeug ermittelten Referenzwert übereinstimmt, und dass der Anhängerstatus hinsichtlich eines angekoppelten Anhängefahrzeugs erkannt wird, wenn der aktuelle Kennwert (Σ PW_{IV} - Σ PW_{OV}, n_{P}, Δp_{Z}, n_{S}, A_{S_m}) größer als der ohne angekoppelten Anhängefahrzeugs ermittelte Referenzwert ist.

13. Verfahren nach einem der Ansprüche 11 bis 12, **dadurch gekennzeichnet, dass** das Leitungsvolumen (V_{BC}) der Bremssteuerleitung (42, 42') als das Leitungsvolumen einer bis zum Kupplungskopf "Bremse" (6) verlaufenden Bremssteuerleitung (42) bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem ohne angekoppelten Anhängefahrzeug ermittelten Referenzwert übereinstimmt, und dass das Leitungsvolumen (V_{BC}) der Bremssteuerleitung (42, 42') als das Leitungsvolumen eines bei angekoppeltem Anhängefahrzeug ermittelten Referenzwertes bestimmt wird, wenn der aktuelle Kennwert (Σ PW_{IV} - Σ PW_{OV}, n_{P}, Δp_{Z}, n_{S}, A_{S_m}) innerhalb einer vorgegebenen Toleranz mit dem betreffenden Referenzwert übereinstimmt, oder durch eine Interpolation zwischen zwei Leitungsvolumenwerten von zwei bei angekoppeltem Anhängefahrzeug ermittelten Referenzwerten bestimmt wird, wenn der aktuelle Kennwert (Σ PW_{IV} - Σ PW_{OV}, n_{P}, Δp_{Z}, n_{S}, A_{S_m}) zwischen den beiden betreffenden Referenzwerten liegt.

14. Verfahren nach einem der Ansprüche 11 bis 13, **dadurch gekennzeichnet, dass** zur Ermittlung des aktuellen Anhängerstatus des Zugfahrzeugs und/oder des aktuellen Leitungsvolumens (V_{BC}) der Bremssteuerleitung (42, 42') zusätzlich der in einer Vorratsleitung des Zugfahrzeugs aktuell anliegende Vorratsdruck (p_{V}) gemessen wird, und dass der Vergleich des jeweiligen Kennwertes (Σ PW_{IV} - Σ PW_{OV}, n_{P}, Δp_{Z}, n_{S}, A_{S_m}) beziehungsweise des Restdruckes (Δp_{R}) mit vorab für den entsprechenden Vorratsdruck (pv) ermittelten sowie abgespeicherten Referenzwerten beziehungsweise Referenzdruckwerten erfolgt.

15. Verfahren nach einem der Ansprüche 11 bis 14, **dadurch gekennzeichnet, dass** die Ermittlung des aktuellen Anhängerstatus des Zugfahrzeugs und/oder des aktuellen Leitungsvolumens (V_{BC}) der Bremssteuerleitung (42, 42') automatisch nach jeder Inbetriebnahme des Zugfahrzeugs und/oder nach jedem Lösen der Parkbremse im Zugfahrzeug durchgeführt wird.

## Claims

1. Method for brake control of a vehicle combination which is made up of a tractor vehicle with a hydraulic or pneumatic braking system and at least one couplable trailer vehicle with a pressure-controlled pneumatic braking system, and in which an electronically controllable brake control valve (2) arranged in the tractor vehicle is used, which has at least two solenoid switching valves which can be actuated by an electronic control unit (8) and are designed as an inlet valve (12) and an outlet valve (14), wherein a brake control pressure (p_{BC}) can be generated by means of the brake control valve (2) in a brake control line (42, 42') running from a brake control output (p22) of the brake control valve (2) to a "brake" coupling head (6) of the tractor vehicle or to a trailer brake valve of the trailer vehicle and/or a "brake" coupling head at the rear of the trailer vehicle, and in which, for ascertaining the current trailer status, it is established whether the tractor vehicle is connected to a trailer vehicle and/or how large the line volume(V_{BC}) of the brake control line (42, 42') is, wherein a target pressure (p_{Z}) to be set in the brake control line (42, 42') is specified, wherein this target pressure (p_{Z}) is introduced into the brake control line (42, 42') by opening the inlet valve (12) in a pulsed manner and/or by opening the outlet valve (14) in a pulsed manner, wherein the brake control pressure (p_{BC}) in the brake control line (42, 42') during the build-up of pressure is measured by sensor means, wherein a characteristic value which is characteristic of the trailer status of the tractor vehicle and/or the line volume (V_{BC}) of the brake control line (42, 42') is determined from the pressure profile with respect to time of the brake control pressure (p_{BC}) and/or the profile with respect to time of the switching states of the inlet valve (12) and/or the outlet valve (14) until the target pressure (p_{Z}) is reached, wherein this characteristic value is compared with at least one reference value ascertained in advance depending on the trailer status of the tractor vehicle and/or the line volume (V_{BC}) of the brake control line (42, 42') and stored in a data memory of the control unit (8), wherein the trailer status of the tractor vehicle and/or the line volume (V_{BC}) of the brake control line (42, 42') are determined depending on the comparison result, **characterized in that** the pulse widths (PW_{IV}, PW_{OV}) of the opening pulses of the inlet valve (12) and the outlet valve (14) are detected until the target pressure (p_{Z}) is reached and in each case separately added to form a pulse width sum
(Σ PW_{IV}) of the inlet valve (12) and to form a pulse width sum (Σ PW_{OV}) of the outlet valve (14), **in that** a pulse width sum difference (Σ PW_{IV} - Σ PW_{OV}) is determined as the characteristic value by subtracting the pulse width sum (Σ PW_{OV}) of the outlet valve (14) from the pulse width sum (Σ PW_{IV}) of the inlet valve (12), and **in that** the current trailer status of the tractor vehicle and/or the current line volume (V_{BC}) of the brake control line (42, 42') are/is determined by comparing the current pulse width sum difference (Σ PW_{IV} - Σ PW_{OV}) with stored pulse width sum difference values n ascertained in advance for different line volumes of the brake control line as reference values (R1, R2, R3, R4, R5, R6, R7, R8).

2. Method according to Claim 1, **characterized in that** the trailer status with respect to a non-coupled trailer vehicle is identified when the current characteristic value (Σ PW_{IV} - Σ PW_{OV}, n_{P}, Δp_{Z}, n_{S}, A_{S_m}) corresponds within a specified tolerance to a reference value ascertained without a coupled trailer vehicle, and **in that** the trailer status with respect to a coupled trailer vehicle is identified when the current characteristic value (Σ PW_{IV} - Σ PW_{OV}, n_{P}, Δp_{Z}, n_{S}, A_{S_m}) is greater than the reference value ascertained without a coupled trailer vehicle.

3. Method according to either of Claims 1 and 2, **characterized in that** the line volume (V_{BC}) of the brake control line (42, 42') is determined as the line volume of a brake control line (42) running to the "brake" coupling head (6) when the current characteristic value (∑ PW_{IV} - Σ PW_{OV}, n_{P}, Δp_{Z}, n_{S}, A_{s_m}) corresponds within a specified tolerance to the reference value ascertained without a coupled trailer vehicle, and **in that** the line volume (V_{BC}) of the brake control line (42, 42') is determined as the line volume of a reference value ascertained with a coupled trailer vehicle when the current characteristic value (Σ PW_{IV} - Σ PW_{OV}, n_{P}, Δp_{Z}, n_{S}, A_{S_m}) corresponds within a specified tolerance to the reference value concerned, or is determined by interpolation between two line volume values of two reference values ascertained with a coupled trailer vehicle when the current characteristic value (Σ PW_{IV} - Σ PW_{OV}, n_{P}, Δp_{Z}, n_{S}, A_{S_m}) lies between the two reference values concerned.

4. Method according to any of Claims 1 to 3, **characterized in that**, in order to ascertain the current trailer status of the tractor vehicle and/or the current line volume (V_{DC}) of the brake control line (42, 42'), the supply pressure (p_{V}) currently present in a supply line of the tractor vehicle is additionally measured, and **in that** the respective characteristic value (Σ PW_{IV} - Σ PW_{OV}, n_{P}, Δp_{Z}, n_{S}, A_{S_m}) or the residual pressure (Δp_{R}) is compared with stored reference values or reference pressure values ascertained in advance for the corresponding supply pressure (p_{V}).

5. Method according to any of Claims 1 to 4, **characterized in that** the current trailer status of the tractor vehicle and/or the current line volume (V_{BC}) of the brake control line (42, 42') is ascertained automatically each time the tractor vehicle is started up and/or each time the parking brake in the tractor vehicle is released.

6. Method for brake control of a vehicle combination which is made up of a tractor vehicle with a hydraulic or pneumatic braking system and at least one couplable trailer vehicle with a pressure-controlled pneumatic braking system, and in which an electronically controllable brake control valve (2) arranged in the tractor vehicle is used, which has at least two solenoid switching valves which can be actuated by an electronic control unit (8) and are designed as an inlet valve (12) and an outlet valve (14), wherein a brake control pressure (p_{BC}) can be generated by means of the brake control valve (2) in a brake control line (42, 42') running from a brake control output (p22) of the brake control valve (2) to a "brake" coupling head (6) of the tractor vehicle or to a trailer brake valve of the trailer vehicle and/or a "brake" coupling head at the rear of the trailer vehicle, and in which, for ascertaining the current trailer status, it is established whether the tractor vehicle is connected to a trailer vehicle and/or how large the line volume(V_{BC}) of the brake control line (42, 42') is, wherein a target pressure (p_{Z}) to be set in the brake control line (42, 42') is specified, wherein this target pressure (p_{Z}) is introduced into the brake control line (42, 42') by opening the inlet valve (12) in a pulsed manner and/or by opening the outlet valve (14) in a pulsed manner, wherein the brake control pressure (p_{BC}) in the brake control line (42, 42') during the build-up of pressure is measured by sensor means, wherein a characteristic value which is characteristic of the trailer status of the tractor vehicle and/or the line volume (V_{BC}) of the brake control line (42, 42') is determined from the pressure profile with respect to time of the brake control pressure (p_{BC}) and/or the profile with respect to time of the switching states of the inlet valve (12) and/or the outlet valve (14) until the target pressure (p_{Z}) is reached, wherein this characteristic value is compared with at least one reference value ascertained in advance depending on the trailer status of the tractor vehicle and/or the line volume (V_{BC}) of the brake control line (42, 42') and stored in a data memory of the control unit (8), wherein the trailer status of the tractor vehicle and/or the line volume (V_{BC}) of the brake control line (42, 42') are determined depending on the comparison result, **characterized in that** the opening pulses (P_{IV}) of the inlet valve (12) and/or the opening pulses (P_{OV}) of the outlet valve (14) are ascertained until the target pressure (p_{Z}) is reached and are summed to form a number of opening pulses (n_{P}) as a characteristic value, and **in that** the current trailer status of the tractor vehicle and/or the current line volume (V_{BC}) of the brake control line (42, 42') are determined by comparing the current opening pulse number with stored opening pulse number values ascertained in advance for different line volumes of the brake control line as reference values.

7. Method according to Claim 6, **characterized in that** the trailer status with respect to a non-coupled trailer vehicle is identified when the current characteristic value (Σ PW_{IV} - Σ PW_{OV}, n_{P}, Δp_{Z}, n_{S}, A_{S_m}) corresponds within a specified tolerance to a reference value ascertained without a coupled trailer vehicle, and **in that** the trailer status with respect to a coupled trailer vehicle is identified when the current characteristic value (Σ PW_{IV} - Σ PW_{OV}, n_{P}, Δp_{Z}, n_{S}, A_{S_m}) is greater than the reference value ascertained without a coupled trailer vehicle.

8. Method according to either of Claims 6 and 7, **characterized in that** the line volume (V_{BC}) of the brake control line (42, 42') is determined as the line volume of a brake control line (42) running to the "brake" coupling head (6) when the current characteristic value (∑ PW_{IV} - Σ PW_{OV}, n_{P}, Δp_{Z}, n_{S}, A_{S_m}) corresponds within a specified tolerance to the reference value ascertained without a coupled trailer vehicle, and **in that** the line volume (V_{BC}) of the brake control line (42, 42') is determined as the line volume of a reference value ascertained with a coupled trailer vehicle when the current characteristic value (Σ PW_{IV} - Σ PW_{OV}, n_{P}, Δp_{Z}, n_{S}, A_{S_m}) corresponds within a specified tolerance to the reference value concerned, or is determined by interpolation between two line volume values of two reference values ascertained with a coupled trailer vehicle when the current characteristic value (Σ PW_{IV} - Σ PW_{OV}, n_{P}, Δp_{Z}, n_{S}, A_{S_m}) lies between the two reference values concerned.

9. Method according to any of Claims 6 to 8, **characterized in that**, in order to ascertain the current trailer status of the tractor vehicle and/or the current line volume (V_{BC}) of the brake control line (42, 42'), the supply pressure (p_{V}) currently present in a supply line of the tractor vehicle is additionally measured, and **in that** the respective characteristic value (Σ PW_{IV} - Σ PW_{OV}, n_{P}, Δp_{Z}, n_{S}, A_{S_m}) or the residual pressure (Δp_{R}) is compared with stored reference values or reference pressure values ascertained in advance for the corresponding supply pressure (p_{V}).

10. Method according to any of Claims 6 to 9, **characterized in that** the current trailer status of the tractor vehicle and/or the current line volume (V_{BC}) of the brake control line (42, 42') is ascertained automatically each time the tractor vehicle is started up and/or each time the parking brake in the tractor vehicle is released.

11. Method for brake control of a vehicle combination which is made up of a tractor vehicle with a hydraulic or pneumatic braking system and at least one couplable trailer vehicle with a pressure-controlled pneumatic braking system, and in which an electronically controllable brake control valve (2) arranged in the tractor vehicle is used, which has at least two solenoid switching valves which can be actuated by an electronic control unit (8) and are designed as an inlet valve (12) and an outlet valve (14), wherein a brake control pressure (p_{BC}) can be generated by means of the brake control valve (2) in a brake control line (42, 42') running from a brake control output (p22) of the brake control valve (2) to a "brake" coupling head (6) of the tractor vehicle or to a trailer brake valve of the trailer vehicle and/or a "brake" coupling head at the rear of the trailer vehicle, and in which, for ascertaining the current trailer status, it is established whether the tractor vehicle is connected to a trailer vehicle and/or how large the line volume(V_{BC}) of the brake control line (42, 42') is, wherein a target pressure (p_{Z}) to be set in the brake control line (42, 42') is specified, wherein this target pressure (p_{Z}) is introduced into the brake control line (42, 42') by opening the inlet valve (12) in a pulsed manner and/or by opening the outlet valve (14) in a pulsed manner, wherein the brake control pressure (p_{BC}) in the brake control line (42, 42') during the build-up of pressure is measured by sensor means, wherein a characteristic value which is characteristic of the trailer status of the tractor vehicle and/or the line volume (V_{BC}) of the brake control line (42, 42') is determined from the pressure profile with respect to time of the brake control pressure (p_{BC}) and/or the profile with respect to time of the switching states of the inlet valve (12) and/or the outlet valve (14) until the target pressure p_{Z}) is reached, wherein this characteristic value is compared with at least one reference value ascertained in advance depending on the trailer status of the tractor vehicle and/or the line volume (V_{BC}) of the brake control line (42, 42') and stored in a data memory of the control unit (8), wherein the trailer status of the tractor vehicle and/or the line volume V_{BC}) of the brake control line (42, 42') are determined depending on the comparison result, **characterized in that** the number of opening pulses (P_{IV}, P_{OV}) of the inlet valve (12) and the outlet valve (14) are detected until the target pressure (p_{Z}) is reached and in each case separately added to form an opening pulse number (Σ n_{P_IV}) of the inlet valve (12) and to form an opening pulse number (Σ n_{P_OV}) of the outlet valve (14), **in that** a pulse number difference (Σ n_{P_IV} - Σ n_{P_OV}) is determined as the characteristic value by subtracting the opening pulse number (Σ n_{P_OV}) of the outlet valve (14) from the opening pulse number (Σ n_{P_IV}) of the inlet valve (12), and **in that** the current trailer status of the tractor vehicle and/or the current line volume (V_{BC}) of the brake control line (42, 42') are/is determined as reference values by comparing the current pulse number difference (Σ n_{P_IV} - ∑ n_{P_OV}) with stored pulse number difference values determined in advance for different line volumes of the brake control line.

12. Method according to Claim 11, **characterized in that** the trailer status with respect to a non-coupled trailer vehicle is identified when the current characteristic value (Σ PW_{IV} - Σ PW_{OV}, n_{P}, Δp_{Z}, n_{S}, A_{S_m}) corresponds within a specified tolerance to a reference value ascertained without a coupled trailer vehicle, and **in that** the trailer status with respect to a coupled trailer vehicle is identified when the current characteristic value (Σ PW_{IV} - Σ PW_{OV}, n_{P}, Δp_{Z}, n_{S}, A_{S_m}) is greater than the reference value ascertained without a coupled trailer vehicle.

13. Method according to either of Claims 11 and 12, **characterized in that** the line volume (V_{BC}) of the brake control line (42, 42') is determined as the line volume of a brake control line (42) running to the "brake" coupling head (6) when the current characteristic value (∑ PW_{IV} - Σ PW_{OV}, n_{P}, Δp_{Z}, n_{S}, A_{S_m}) corresponds within a specified tolerance to the reference value ascertained without a coupled trailer vehicle, and **in that** the line volume (V_{BC}) of the brake control line (42, 42') is determined as the line volume of a reference value ascertained with a coupled trailer vehicle when the current characteristic value (Σ PW_{IV} - Σ PW_{OV}, n_{P}, Δp_{Z}, n_{S}, A_{S_m}) corresponds within a specified tolerance to the reference value concerned, or is determined by interpolation between two line volume values of two reference values ascertained with a coupled trailer vehicle when the current characteristic value (Σ PW_{IV} - Σ PW_{OV}, n_{P}, Δp_{Z}, n_{S}, A_{S_m}) lies between the two reference values concerned.

14. Method according to any of Claims 11 to 13, **characterized in that**, in order to ascertain the current trailer status of the tractor vehicle and/or the current line volume (V_{BC}) of the brake control line (42, 42'), the supply pressure (p_{V}) currently present in a supply line of the tractor vehicle is additionally measured, and **in that** the respective characteristic value (Σ PW_{IV} - Σ PW_{OV}, n_{P}, Δp_{Z}, n_{S}, A_{S_m}) or the residual pressure (Δp_{R}) is compared with stored reference values or reference pressure values ascertained in advance for the corresponding supply pressure (p_{V}).

15. Method according to any of Claims 11 to 14, **characterized in that** the current trailer status of the tractor vehicle and/or the current line volume (V_{BC}) of the brake control line (42, 42') is ascertained automatically each time the tractor vehicle is started up and/or each time the parking brake in the tractor vehicle is released.

## Revendications

1. Procédé de commande de freinage d'un ensemble de véhicules, lequel est constitué d'un véhicule tracteur équipé d'un système de freinage hydraulique ou pneumatique et d'au moins un véhicule remorqué attelable doté d'un système de freinage pneumatique commandé par pression, et dans lequel on utilise une soupape de commande de frein (2) commandable électroniquement et disposée dans le véhicule tracteur, laquelle comporte au moins deux électrovannes pilotables par une unité de commande électronique (8), conçues comme une soupape d'admission (12) et une soupape d'échappement (14), une pression de commande de frein (p_{BC}) pouvant être générée, au moyen de la soupape de commande de frein (2), dans une conduite de commande de frein (42, 42') s'étendant d'une sortie de commande de frein (p22) de la soupape de commande de frein (2), jusqu'à une tête d'accouplement "Frein" (6) du véhicule tracteur, ou jusqu'à une soupape de frein de remorque du véhicule remorqué, et/ou jusqu'à une tête d'accouplement "Frein" à l'arrière du véhicule remorqué, et dans lequel, pour déterminer l'état actuel de la remorque, il est établi si le véhicule tracteur est relié à un véhicule remorqué et/ou quelle est l'importance du volume de conduite (V_{BC}) de la conduite de commande de frein (42, 42'), une pression cible (p_{Z}) à établir dans la conduite de commande de frein (42, 42') étant prédéfinie, laquelle pression cible (p_{Z}) est pilotée dans la conduite de commande de frein (42, 42') par une ouverture pulsée de la soupape d'admission (12) et/ou par une ouverture pulsée de la soupape d'échappement (14), la pression de commande de frein (p_{BC}) dans la conduite de commande de frein (42, 42') étant mesurée par capteur pendant la montée en pression, dans lequel, à partir de l'évolution temporelle de la pression de commande de frein (p_{BC}) et/ou de l'évolution temporelle des états de commutation de la soupape d'admission (12) et/ou de la soupape d'échappement (14) jusqu'à l'atteinte de la pression cible (p_{Z}), une valeur caractéristique représentative de l'état de la remorque du véhicule tracteur et/ou du volume de conduite (V_{BC}) de la conduite de commande de frein (42, 42') est déterminée, cette valeur caractéristique étant comparée à au moins une valeur de référence déterminée au préalable en fonction de l'état de la remorque du véhicule tracteur et/ou du volume de conduite (V_{BC}) de la conduite de commande de frein (42, 42') et mémorisée dans une mémoire de données de l'unité de commande (8), l'état de la remorque du véhicule tracteur et/ou le volume de conduite (V_{BC}) de la conduite de commande de frein (42, 42') étant déterminés en fonction du résultat de la comparaison, **caractérisé en ce que** les largeurs d'impulsion (PW_{IV}, PW_{OV}) des impulsions d'ouverture de la soupape d'admission (12) et de la soupape d'échappement (14) jusqu'à l'atteinte de la pression cible (p_{Z}) sont enregistrées et additionnées chacune séparément pour établir une somme de largeurs d'impulsion
(Σ PW_{IV}) de la soupape d'admission (12) et une somme de largeurs d'impulsion (Σ PW_{OV}) de la soupape d'échappement (14), **en ce qu'**une différence de sommes de largeurs d'impulsion (Σ PW_{IV} - Σ PW_{OV}) est déterminée comme valeur caractéristique par soustraction de la somme de largeurs d'impulsion (Σ PW_{OV}) de la soupape d'échappement (14) à la somme de largeurs d'impulsion (Σ PW_{IV}) de la soupape d'admission (12), et **en ce que** l'état actuel de la remorque du véhicule tracteur et/ou le volume de conduite actuel (V_{BC}) de la conduite de commande de frein (42, 42') sont déterminés par comparaison de la différence de sommes de largeurs d'impulsion actuelle (Σ PW_{IV} - Σ PW_{OV}) à des valeurs de différence de sommes de largeurs d'impulsion déterminées au préalable et mémorisées comme valeurs de référence (R1, R2, R3, R4, R5, R6, R7, R8) pour différents volumes de conduite de la conduite de commande de frein.

2. Procédé selon la revendication 1, **caractérisé en ce que** l'état de la remorque est reconnu comme correspondant à un véhicule remorqué non attelé lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à une valeur de référence déterminée sans véhicule remorqué attelé, et **en ce que** l'état de la remorque est reconnu comme correspondant à un véhicule remorqué attelé lorsque la valeur caractéristique actuelle (Σ PW_{IV} - Σ PW_{OV}, n_{P}, Δp_{Z}, n_{S}, A_{S_m}) est supérieure à la valeur de référence déterminée sans véhicule remorqué attelé.

3. Procédé selon l'une quelconque des revendications 1 à 2, **caractérisé en ce que** le volume de conduite (V_{BC}) de la conduite de commande de frein (42, 42') est déterminé comme étant le volume de conduite d'une conduite de commande de frein (42) s'étendant jusqu'à la tête d'accouplement "Frein" (6), lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à la valeur de référence déterminée sans véhicule remorqué attelé, et **en ce que** le volume de conduite (V_{BC}) de la conduite de commande de frein (42, 42') est déterminé comme étant le volume de conduite d'une valeur de référence déterminée avec véhicule remorqué attelé, lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à la valeur de référence concernée, ou est déterminé par interpolation entre deux valeurs de volume de conduite de deux valeurs de référence déterminées avec véhicule remorqué attelé, lorsque la valeur caractéristique actuelle (Σ PW_{IV} - Σ PW_{OV}, n_{P}, Δp_{Z}, n_{S}, A_{S_m}) se situe entre les deux valeurs de référence concernées.

4. Procédé selon l'une quelconque des revendications 1 à 3, **caractérisé en ce que**, pour déterminer l'état actuel de la remorque du véhicule tracteur et/ou le volume de conduite actuel (V_{BC}) de la conduite de commande de frein (42, 42'), on mesure en outre la pression de réserve (p_{V}) régnant actuellement dans une conduite de réserve du véhicule tracteur, et **en ce que** la comparaison de la valeur caractéristique respective (Σ PW_{IV} - Σ PW_{OV}, n_{P}, Δp_{Z}, n_{S}, A_{S_m}) ou de la pression résiduelle (Δp_{R}) s'effectue avec des valeurs de référence ou des valeurs de pression de référence déterminées au préalable et mémorisées pour la pression de réserve (p_{V}) correspondante.

5. Procédé selon l'une quelconque des revendications 1 à 4, **caractérisé en ce que** la détermination de l'état actuel de la remorque du véhicule tracteur et/ou du volume de conduite actuel (V_{BC}) de la conduite de commande de frein (42, 42') est effectuée automatiquement après chaque mise en service du véhicule tracteur et/ou après chaque desserrage du frein de stationnement dans le véhicule tracteur.

6. Procédé de commande de freinage d'un ensemble de véhicules, lequel est constitué d'un véhicule tracteur équipé d'un système de freinage hydraulique ou pneumatique et d'au moins un véhicule remorqué attelable doté d'un système de freinage pneumatique commandé par pression, et dans lequel on utilise une soupape de commande de frein (2) commandable électroniquement et disposée dans le véhicule tracteur, laquelle comporte au moins deux électrovannes pilotables par une unité de commande électronique (8), conçues comme une soupape d'admission (12) et une soupape d'échappement (14), une pression de commande de frein (p_{BC}) pouvant être générée, au moyen de la soupape de commande de frein (2), dans une conduite de commande de frein (42, 42') s'étendant d'une sortie de commande de frein (p22) de la soupape de commande de frein (2), jusqu'à une tête d'accouplement "Frein" (6) du véhicule tracteur, ou jusqu'à une soupape de frein de remorque du véhicule remorqué, et/ou jusqu'à une tête d'accouplement "Frein" à l'arrière du véhicule remorqué, et dans lequel, pour déterminer l'état actuel de la remorque, il est établi si le véhicule tracteur est relié à un véhicule remorqué et/ou quelle est l'importance du volume de conduite (V_{BC}) de la conduite de commande de frein (42, 42'), une pression cible (p_{Z}) à établir dans la conduite de commande de frein (42, 42') étant prédéfinie, laquelle pression cible (p_{Z}) est pilotée dans la conduite de commande de frein (42, 42') par une ouverture pulsée de la soupape d'admission (12) et/ou par une ouverture pulsée de la soupape d'échappement (14), la pression de commande de frein (p_{BC}) dans la conduite de commande de frein (42, 42') étant mesurée par capteur pendant la montée en pression, dans lequel, à partir de l'évolution temporelle de la pression de commande de frein (p_{BC}) et/ou de l'évolution temporelle des états de commutation de la soupape d'admission (12) et/ou de la soupape d'échappement (14) jusqu'à l'atteinte de la pression cible (p_{Z}), une valeur caractéristique représentative de l'état de la remorque du véhicule tracteur et/ou du volume de conduite (V_{BC}) de la conduite de commande de frein (42, 42') est déterminée, cette valeur caractéristique étant comparée à au moins une valeur de référence déterminée au préalable en fonction de l'état de la remorque du véhicule tracteur et/ou du volume de conduite (V_{BC}) de la conduite de commande de frein (42, 42') et mémorisée dans une mémoire de données de l'unité de commande (8), l'état de la remorque du véhicule tracteur et/ou le volume de conduite (V_{BC}) de la conduite de commande de frein (42, 42') étant déterminés en fonction du résultat de la comparaison, **caractérisé en ce que** les impulsions d'ouverture (P_{IV}) de la soupape d'admission (12) et/ou les impulsions d'ouverture (P_{OV}) de la soupape d'échappement (14) sont déterminées jusqu'à l'atteinte de la pression cible (p_{Z}) et sont additionnées pour établir un nombre d'impulsions d'ouverture (n_{P}) en tant que valeur caractéristique, et **en ce qu'**en comparant le nombre d'impulsions d'ouverture actuel à des valeurs de nombre d'impulsions d'ouverture déterminées au préalable et mémorisées comme valeurs de référence pour différents volumes de conduite de la conduite de commande de frein, l'état actuel de la remorque du véhicule tracteur et/ou le volume de conduite actuel (V_{BC}) de la conduite de commande de frein (42, 42') sont déterminés.

7. Procédé selon la revendication 6, **caractérisé en ce que** l'état de la remorque est reconnu comme correspondant à un véhicule remorqué non attelé lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à une valeur de référence déterminée sans véhicule remorqué attelé, et **en ce que** l'état de la remorque est reconnu comme correspondant à un véhicule remorqué attelé lorsque la valeur caractéristique actuelle (Σ PW_{IV} - Σ PW_{OV}, n_{P}, Δp_{Z}, n_{S}, A_{S_m}) est supérieure à la valeur de référence déterminée sans véhicule remorqué attelé.

8. Procédé selon l'une quelconque des revendications 6 à 7, **caractérisé en ce que** le volume de conduite (V_{BC}) de la conduite de commande de frein (42, 42') est déterminé comme étant le volume de conduite d'une conduite de commande de frein (42) s'étendant jusqu'à la tête d'accouplement "Frein" (6), lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à la valeur de référence déterminée sans véhicule remorqué attelé, et **en ce que** le volume de conduite (V_{BC}) de la conduite de commande de frein (42, 42') est déterminé comme étant le volume de conduite d'une valeur de référence déterminée avec véhicule remorqué attelé, lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à la valeur de référence concernée, ou est déterminé par interpolation entre deux valeurs de volume de conduite de deux valeurs de référence déterminées avec véhicule remorqué attelé, lorsque la valeur caractéristique actuelle (Σ PW_{IV} - Σ PW_{OV}, n_{P}, Δp_{Z}, n_{S}, A_{S_m}) se situe entre les deux valeurs de référence concernées.

9. Procédé selon l'une quelconque des revendications 6 à 8, **caractérisé en ce que**, pour déterminer l'état actuel de la remorque du véhicule tracteur et/ou le volume de conduite actuel (V_{BC}) de la conduite de commande de frein (42, 42'), on mesure en outre la pression de réserve (p_{V}) régnant actuellement dans une conduite de réserve du véhicule tracteur, et **en ce que** la comparaison de la valeur caractéristique respective (Σ PW_{IV} - Σ PW_{OV}, n_{P}, Δp_{Z}, n_{S}, A_{S_m}) ou de la pression résiduelle (Δp_{R}) s'effectue avec des valeurs de référence ou des valeurs de pression de référence déterminées au préalable et mémorisées pour la pression de réserve (p_{V}) correspondante.

10. Procédé selon l'une quelconque des revendications 6 à 9, **caractérisé en ce que** la détermination de l'état actuel de la remorque du véhicule tracteur et/ou du volume de conduite actuel (V_{BC}) de la conduite de commande de frein (42, 42') est effectuée automatiquement après chaque mise en service du véhicule tracteur et/ou après chaque desserrage du frein de stationnement dans le véhicule tracteur.

11. Procédé de commande de freinage d'un ensemble de véhicules, lequel est constitué d'un véhicule tracteur équipé d'un système de freinage hydraulique ou pneumatique et d'au moins un véhicule remorqué attelable doté d'un système de freinage pneumatique commandé par pression, et dans lequel on utilise une soupape de commande de frein (2) commandable électroniquement et disposée dans le véhicule tracteur, laquelle comporte au moins deux électrovannes pilotables par une unité de commande électronique (8), conçues comme une soupape d'admission (12) et une soupape d'échappement (14), une pression de commande de frein (p_{BC}) pouvant être générée, au moyen de la soupape de commande de frein (2), dans une conduite de commande de frein (42, 42') s'étendant d'une sortie de commande de frein (p22) de la soupape de commande de frein (2), jusqu'à une tête d'accouplement "Frein" (6) du véhicule tracteur, ou jusqu'à une soupape de frein de remorque du véhicule remorqué, et/ou jusqu'à une tête d'accouplement "Frein" à l'arrière du véhicule remorqué, et dans lequel, pour déterminer l'état actuel de la remorque, il est établi si le véhicule tracteur est relié à un véhicule remorqué et/ou quelle est l'importance du volume de conduite (V_{BC}) de la conduite de commande de frein (42, 42'), une pression cible (p_{Z}) à établir dans la conduite de commande de frein (42, 42') étant prédéfinie, laquelle pression cible (p_{Z}) est pilotée dans la conduite de commande de frein (42, 42') par une ouverture pulsée de la soupape d'admission (12) et/ou par une ouverture pulsée de la soupape d'échappement (14), la pression de commande de frein (p_{BC}) dans la conduite de commande de frein (42, 42') étant mesurée par capteur pendant la montée en pression, dans lequel, à partir de l'évolution temporelle de la pression de commande de frein (p_{BC}) et/ou de l'évolution temporelle des états de commutation de la soupape d'admission (12) et/ou de la soupape d'échappement (14) jusqu'à l'atteinte de la pression cible (p_{Z}), une valeur caractéristique représentative de l'état de la remorque du véhicule tracteur et/ou du volume de conduite (V_{BC}) de la conduite de commande de frein (42, 42') est déterminée, cette valeur caractéristique étant comparée à au moins une valeur de référence déterminée au préalable en fonction de l'état de la remorque du véhicule tracteur et/ou du volume de conduite (V_{BC}) de la conduite de commande de frein (42, 42') et mémorisée dans une mémoire de données de l'unité de commande (8), en fonction du résultat de la comparaison, l'état de la remorque du véhicule tracteur et/ou le volume de conduite (V_{BC}) de la conduite de commande de frein (42, 42') étant déterminés en fonction du résultat de la comparaison, **caractérisé en ce que** le nombre des impulsions d'ouverture (P_{IV}, P_{OV}) de la soupape d'admission (12) et de la soupape de sortie (14) jusqu'à l'atteinte de la pression cible (p_{Z}) est détecté et additionné séparément pour chaque soupape pour établir un nombre d'impulsions d'ouverture (Σ n_{P_IV}) de la soupape d'admission (12) et un nombre d'impulsions d'ouverture (Σ n_{P_OV}) de la soupape d'échappement (14), **en ce qu'**une différence de nombres d'impulsions (Σ n_{P_IV} - Σ n_{P_OV}) est déterminée comme valeur caractéristique par soustraction du nombre d'impulsions d'ouverture (Σ n_{P_OV}) de la soupape d'échappement (14) à la somme des impulsions d'ouverture (Σ n_{P_IV}) de la soupape d'admission (12), et **en ce qu'**en comparant la différence actuelle de nombres d'impulsions à des valeurs de différence de nombres d'impulsions déterminées au préalable et mémorisées comme valeurs de référence pour différents volumes de conduite de la conduite de commande de frein, l'état actuel de la remorque du véhicule tracteur et/ou le volume de conduite actuel (V_{BC}) de la conduite de commande de frein (42, 42') sont déterminés.

12. Procédé selon la revendication 11, **caractérisé en ce que** l'état de la remorque est reconnu comme correspondant à un véhicule remorqué non attelé lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à une valeur de référence déterminée sans véhicule remorqué attelé, et **en ce que** l'état de la remorque est reconnu comme correspondant à un véhicule remorqué attelé lorsque la valeur caractéristique actuelle (Σ PW_{IV} - Σ PW_{OV}, n_{P}, Δp_{Z}, n_{S}, A_{S_m}) est supérieure à la valeur de référence déterminée sans véhicule remorqué attelé.

13. Procédé selon l'une quelconque des revendications 11 à 12, **caractérisé en ce que** le volume de conduite (V_{BC}) de la conduite de commande de frein (42, 42') est déterminé comme étant le volume de conduite d'une conduite de commande de frein (42) s'étendant jusqu'à la tête d'accouplement "Frein" (6), lorsque la valeur caractéristique actuelle (Σ PW_{IV} - Σ PW_{OV}, n_{P}, Δp_{Z}, n_{S}, A_{s_m}) correspond, dans les limites d'une tolérance prédéfinie, à la valeur de référence déterminée sans véhicule remorqué attelé, et **en ce que** le volume de conduite (V_{BC}) de la conduite de commande de frein (42, 42') est déterminé comme étant le volume de conduite d'une valeur de référence déterminée avec véhicule remorqué attelé, lorsque la valeur caractéristique actuelle (Σ PW_{IV} - Σ PW_{OV}, n_{P}, Δp_{Z}, n_{S}, A_{S_m}) correspond, dans les limites d'une tolérance prédéfinie, à la valeur de référence concernée, ou est déterminé par interpolation entre deux valeurs de volume de conduite de deux valeurs de référence déterminées avec véhicule remorqué attelé, lorsque la valeur caractéristique actuelle (Σ PW_{IV} - Σ PW_{OV}, n_{P}, Δp_{Z}, n_{S}, A_{S_m}) se situe entre les deux valeurs de référence concernées.

14. Procédé selon l'une quelconque des revendications 11 à 13, **caractérisé en ce que**, pour déterminer l'état actuel de la remorque du véhicule tracteur et/ou le volume de conduite actuel (V_{BC}) de la conduite de commande de frein (42, 42'), on mesure en outre la pression de réserve (p_{V}) régnant actuellement dans une conduite de réserve du véhicule tracteur, et **en ce que** la comparaison de la valeur caractéristique respective (Σ PW_{IV} - Σ PW_{OV}, n_{P}, Δp_{Z}, n_{S}, A_{S_m}) ou de la pression résiduelle (Δp_{R}) s'effectue avec des valeurs de référence ou des valeurs de pression de référence déterminées au préalable et mémorisées pour la pression de réserve (p_{V}) correspondante.

15. Procédé selon l'une quelconque des revendications 11 à 14, **caractérisé en ce que** la détermination de l'état actuel de la remorque du véhicule tracteur et/ou du volume de conduite actuel (V_{BC}) de la conduite de commande de frein (42, 42') est effectuée automatiquement après chaque mise en service du véhicule tracteur et/ou après chaque desserrage du frein de stationnement dans le véhicule tracteur.
